# EUROPÄISCHE PATENTANMELDUNG

(11) **EP 3 971 022 A2**
(43) Veröffentlichungstag der Anmeldung: **23.03.2022**
(21) Anmeldenummer: 21197255.9
(22) Anmeldetag: 16.09.2021
(51) Int. Cl.: B60L 53/63, B60L 53/62

(54) **VERFAHREN ZUM LADEN EINES ELEKTROFAHRZEUGS**

(30) Priorität: 16.09.2020 DE 102020124123
(71) Anmelder: mensch und mouse Informationstechnik GmbH, 55129 Mainz (DE)
(72) Erfinder: SCHULMEYER, Dennis, 55129 Mainz (DE)
(74) Vertreter: Richardt Patentanwälte PartG mbB

(57) **Zusammenfassung**

Die Erfindung betrifft ein Verfahren zum Laden eines Elektrofahrzeugs (100) an einem Ladepunkt (102) unter Verwendung einer Phasenwechselschaltung (116), wobei das Verfahren durch die Phasenwechselschaltung (116) den Empfang eines Steuersignals zum Durchführen des Ladevorgangs des Elektrofahrzeugs (100) umfasst, wobei das Steuersignal angibt, welcher oder welche Außenleiter eines versorgungsnetzseitigen Eingangsanschlusses (204) und eines Elektrofahrzeugseitigen Ausgangsanschlusses (206) der Phasenwechselschaltung (116) miteinander zu verbinden sind, wobei als Reaktion auf den Empfang des Steuersignals die Phasenwechselschaltung (116) eine Phasenschaltung durchführt welche umfasst: Miteinander Verbinden des oder der Außenleiter des Eingangsanschlusses (204) und des Ausgangsanschlusses (206) durch eine Relaisanordnung (402) der Phasenwechselschaltung (116) entsprechend dem Steuersignal, und nach dem Verbinden, Schließen der Schaltkontakte eines Schütz der Phasenwechselschaltung (116).

## Beschreibung

Die Erfindung betrifft ein Verfahren zum Laden eines Elektrofahrzeugs, eine Kontrolleinheit zum Laden eines Elektrofahrzeugs, ein System zum Laden eines Elektrofahrzeugs, sowie ein Computerprogrammprodukt.

Die Elektromobilität erfordert eine flächendeckende Versorgung mit Ladepunkten, an welchen Elektrofahrzeuge elektrisch aufgeladen werden können. Elektrofahrzeuge können PKWs, LKWs, Fahrräder, Elektroroller und vieles mehr sein. Um eine entsprechende Infrastruktur aufzubauen können hierfür spezielle Ladestationen zum Einsatz kommen, welche direkt ans öffentliche Stromnetz angeschlossen sind. Insbesondere für den privaten Einsatz und den Einsatz zum Beispiel in Einkaufszentren und Parkhäusern erscheint dies jedoch unpraktisch, da hierfür die Betreiber zusätzlich zu den bereits bestehenden "Hausanschlüssen" noch einen weiteren Anschluss an das öffentliche Stromnetz benötigen.

Als Hausanschluss wird dabei die Verbindungsstelle zwischen den Elektrizitätsleitungen des Energiversorgungsunternehmens und den Leitungen der Verbraucher des Gebäudes verstanden. "Haus" bzw. Verbraucher bzw. Gebäude ist im Rahmen der vorliegenden Beschreibung allgemein zu verstehen und beschränkt sich nicht auf private Immobilien wie Einfamilienhäuser, sondern umfasst die bereits beispielhaft erwähnten Parkhäuser, Einkaufszentren, Mehrfamilienhäuser und öffentliche Einrichtungen.

Beispielsweise offenbart die US2011133693 A1 eine Ladestation für Fahrzeuge mit Lastmanagement.

Der Erfindung liegt die Aufgabe zugrunde, ein verbessertes Verfahren zum Laden eines Elektrofahrzeugs, ein entsprechendes System, eine Kontrolleinheit und ein Computerprogrammprodukt zu schaffen. Die der Erfindung zugrunde liegenden Aufgaben werden durch die Merkmale der unabhängigen Patentansprüche gelöst. Bevorzugte Ausführungsformen der Erfindung sind in den abhängigen Patentansprüchen angegeben.

Es wird ein Verfahren zum Laden eines Elektrofahrzeugs an einem Ladepunkt unter Verwendung einer Phasenwechselschaltung angegeben, wobei die Phasenwechselschaltung aufweist: Einen versorgungsnetzseitigen Eingangsanschluss mit Außenleitern und einen elektrofahrzeugseitigen Ausgangsanschluss mit Außenleitern. Z.B. sind die Außenleiter des versorgungsnetzseitigen Eingangsanschlusses mit Außenleitern eines mit Versorgungsnetzspannung versorgten Elektro-Gebäudeanschlusses verbunden, wobei das Fahrzeug am Ausgangsanschluss für den Ladevorgang angeschlossen werden kann. Ferner ist ein Schütz und eine Relaisanordnung vorgesehen, wobei die Relaisanordnung über Schaltkontakte des Schützes mit dem Eingangsanschluss verbunden ist, und wobei die Relaisanordnung mit dem Ausgangsanschluss verbunden ist. Das Verfahren durch die Phasenwechselschaltung umfasst den Empfang eines Steuersignals zum Durchführen des Ladevorgangs des Elektrofahrzeugs, wobei das Steuersignal angibt, welcher oder welche Außenleiter des versorgungsnetzseitigen Eingangsanschlusses und des elektrofahrzeugseitigen Ausgangsanschlusses miteinander zu verbinden sind, wobei als Reaktion auf den Empfang des Steuersignals die Phasenwechselschaltung eine Phasenschaltung durchführt. Diese Phasenschaltung umfasst ein miteinander Verbinden des oder der Außenleiter des Eingangsanschlusses und des Ausgangsanschlusses durch die Relaisanordnung entsprechend dem Steuersignal, und nach dem Verbinden, Schließen der Schaltkontakte.

Das Steuersignal kann angeben, welche der Außenleiter des Eingangsanschlusses mit welchen Außenleitern des Ausgangsanschlusses zu verbinden sind. Es ist aber auch möglich, dass das Steuersignal lediglich angibt, dass alle Außenleiter des Eingangsanschlusses und des Ausgangsanschlusses miteinander zu verbinden sind. Es versteht sich von selbst, dass hiermit jeweils eine 1 zu 1 Verbindung zwischen einem derjeweiligen Außenleiter gemeint ist (L1 mit L1, L2 mit L2 usw.)

Das Verfahren könnte den Vorteil haben, dass aufgrund der beschriebenen Schaltreihenfolge (zuerst Verbinden der Außenleiter und anschließend Schließen der Schaltkontakte) die Gesamtkosten der Phasenwechselschaltung minimiert werden können. Die Relaisanordnung ermöglicht, dass die Außenleiter des Eingangsanschlusses und des Ausgangsanschlusses individuell miteinander verbunden werden können. Im Fall von beispielsweise 3 Phasen erfordert dies das Vorhandensein von mindestens 5 Relais. Vorzugsweise sind genau 5 (bestimmte) Relais vorgesehen. Ohne das oben beschriebene Verfahren müssten diese 5 Relais so ausgebildet sein, dass sie bei sehr hohen Ladeströmen, wie sie beim Ladevorgang von Elektrofahrzeugen vorliegen, dennoch sicher schalten können. Entsprechende Relais müssten entsprechend massiv ausgebildet sein und zum Beispiel mit weiteren Maßnahmen zur Vermeidung von Schaltlichtbögen ausgestattet sein, was insgesamt die Kosten von solchen Relais deutlich in die Höhe treiben würde. Mehrpolige Schütze hingegen sind auch für hohe Schaltströme "von der Stange zu niedrigeren Kosten" zu haben. Dadurch, dass die Phasenwechselschaltung grundsätzlich eine Schaltung der Relais der Relaisanordnung nur dann vornimmt, wenn die Schaltkontakte des Schützes offen sind, kann also ein Schalten der Relais bei null Stromfluss stattfinden, sodass die Anforderungen an die Relais bezüglich schaltbarer Schaltströme minimal gehalten werden können.

Es angemerkt, dass im Rahmen der vorliegenden Beschreibung die Begriffe "Außenleiter" und "Phase" als Synonyme für einen Leiter verwendet werden, der im üblichen Betrieb unter Spannung steht und zu Übertragung oder Verteilung elektrischer Energie beitragen kann, aber kein neutraler Leiter ist. Im Fall eines üblichen Dreiphasen Anschlusses gibt es drei Außenleiter, die mit L1, L2 und L3 bezeichnet werden.

Nach einer Ausführungsform ermöglicht die Phasenwechselschaltung das Verbinden der Außenleiter nur dann, wenn die Schaltkontakte geöffnet sind, wobei im Falle dessen das Steuersignal empfangen wird während die Schaltkontakte geschlossen sind zunächst die Schaltkontakte geöffnet werden, dann das Verbinden der Außenleiter stattfindet und anschließend das Schließen der Schaltkontakte erfolgt. Somit könnte eine Selbstüberwachung der Phasenwechselschaltung stattfinden sodass verhindert werden könnte, dass die Relais bei Anliegen hohe Ströme geschaltet werden. Dies könnte das Risiko einer entsprechenden Beschädigung der Phasenwechselschaltung deutlich minimieren.

Nach einer Ausführungsformen sind die Außenleiter des versorgungsnetzseitigen Eingangsanschlusses des Ladepunkts mit entsprechenden Außenleitern eines mit Versorgungsnetzspannung versorgten Elektro-Gebäudeanschlusses verbunden. Zum Beispiel ist die Anzahl der Außenleiter des elektrofahrzeugseitigen Ausgangsanschlusses identisch mit der Anzahl der Außenleiter des versorgungsnetzseitigen Eingangsanschlusses. Dies sollte normalerweise der Fall sein. Das Verfahren umfasst ferner ein Durchführen einer ersten Außenleiterbestimmung, umfassend Bestimmung der Außenleiter des versorgungsnetzseitigen Eingangsanschlusses, bei deren Verwendung für den Ladevorgang des Elektrofahrzeugs eine etwaige versorgungsnetzseitige Schieflast bezüglich aller Außenleiter des Elektro-Gebäudeanschlusses minimiert wird.

Dies könnte dann Vorteil haben, dass das Risiko einer zu großen Schieflast, also einer ungleichmäßigen Belastung der Außenleiter des Elektro-Gebäudeanschlusses, z.B. eines Dreiphasen-Wechselstromnetzes, minimiert wird. Eine Schieflast könne daraus resultieren, dass nebst eines durchzuführenden zum Beispiel einphasigen Ladevorgangs eines Elektrofahrzeugs verschiedene Phasen des für den Ladevorgang verwendeten Hausanschlusses durch unterschiedliche Verbraucher unterschiedlich belastet sind. So könnte beispielsweise Waschmaschine, Trockner und Heizung an einer Phase angeschlossen sein, wohingegen Beleuchtung und Steckdosen an einer anderen Phase angeschlossen sind. Die erste Außenleiterbestimmung könnte feststellen, welche der Phasen des Hausanschlusses aktuell wie stark belastet sind und dementsprechend auswählen, welche Phasen für den anstehenden (im obigen Beispiel einphasigen) Ladevorgang des Elektrofahrzeugs zu verwenden sind, sodass insgesamt eine bestehende etwaige Schieflast minimiert wird.

Der oder die im Rahmen der ersten Außenleiterbestimmung bestimmte(n) Außenleiter könnte durch das Steuersignal angegeben werden. Dementsprechend kann die Phasenwechselschaltung den oder die so bestimmten Außenleiter des versorgungsnetzseitige in Eingangsanschlusses mit entweder einem zum Beispiel für einphasigen Ladevorgänge fest vorgegebenen Außenleiter des elektrofahrzeugseitigen Ausgangsanschlusses verbinden oder mit bestimmen Außenleitern des elektrofahrzeugseitigen Ausgangsanschlusses verbinden, welche ebenfalls in dem Steuersignal zusätzlich angegeben sein können.

Nach einer Ausführungsform umfasst das Verfahren ferner ein Durchführen einer zweiten Außenleiterbestimmung umfassend Bestimmung der Außenleiter des elektrofahrzeugseitigen Ausgangsanschlusses, welche für den Ladevorgang verwendet werden (sollen). Diese im Rahmen der zweiten Außenleiterbestimmung bestimmten Außenleiter des elektrofahrzeugseitigen Ausgangsanschlusses können in dem Steuersignal ebenfalls der Phasenwechselschaltung übermittelt werden. Dementsprechend kann die Phasenwechselschaltung auf Basis des Steuersignals den oder die so bestimmten Außenleiter des elektrofahrzeugseitigen Ausgangsanschlusses mit entweder einem zum Beispiel für einphasige Ladevorgänge fest vorgegebenen Außenleiter des versorgungsnetzseitigen Eingangsanschlusses verbinden oder mit entsprechenden Außenleitern des versorgungsnetzseitigen Eingangsanschlusses verbinden, welche in dem Steuersignal zusätzlich angegeben sind.

Nach einer Ausführungsform erfolgt das durchführen der ersten und/oder zweiten Außenleiterbestimmung so, dass ein möglichst gleicher Stromfluss für alle Außenleiter des Elektro-Gebäudeanschlusses resultiert (z.B. Differenz max. 20%, bevorzug max. 10%).

Zum Beispiel umfasst das Verfahren ein Senden des Steuersignals als erstes Steuersignal an die Phasenwechselschaltung welches angibt, dass die mittels der ersten und ersten Außenleiterbestimmung bestimmten Außenleiter des elektrofahrzeugseitigen Ausgangsanschlusses und des für den Ladevorgang verwendeten versorgungsnetzseitigen Eingangsanschlusses miteinander verbunden werden sollen, und daraufhin ein Durchführen der Phasenschaltung als erste Phasenschaltung als Reaktion auf den Empfang des ersten Steuersignals.

Bezüglich der Bestimmung der Außenleiter des elektrofahrzeugseitigen Ausgangsanschlusses gibt es verschiedene Möglichkeiten. Zum Beispiel umfasst die zweite Außenleiterbestimmung der Außenleiter des elektrofahrzeugseitigen Ausgangsanschlusses eine Bestimmung der Anzahl N der Außenleiter des elektrofahrzeugseitigen Ausgangsanschlusses, welche für den Ladevorgang verwendet werden, wobei im Falle dessen nicht alle Außenleiter des elektrofahrzeugseitigen Ausgangsanschlusses für den Ladevorgang verwendet werden die erste Außenleiterbestimmung des versorgungsnetzseitigen Eingangsanschlusses eine Bestimmung der N Außenleiter des versorgungsnetzseitigen Eingangsanschlusses umfasst, bei deren Verwendung für den Ladevorgang des Elektrofahrzeugs eine etwaige versorgungsnetzseitige Schieflast bezüglich aller Außenleiter des Elektro-Gebäudeanschlusses minimiert wird.

Im Ergebnis kann das Signal dann angeben, welche der so bestimmten N Außenleiter des versorgungsnetzseitigen Eingangsanschlusses mit den im Rahmen der zweiten Außenleiterbestimmung bestimmten Außenleiter des elektrofahrzeugseitigen Ausgangsanschlusses verbunden werden müssen. Ist beispielsweise ein einphasiger Ladevorgang vorgesehen, zum Beispiel mit Phase L1 (welche durch die zweite Außenleiterbestimmung bestimmt oder festgestellt wurde), so würde im Rahmen der ersten Außenleiterbestimmung eine Phase selektiert werden, bei deren Verwendung für den anstehenden einphasigen Ladevorgang die Schieflast minimiert wird. Das Signal kann auch für Fahrzeuge, die regulär auf drei Phasen geladen werden, festlegen, dass das Laden im konkreten Fall nur auf einer Phase erfolgt, gerade wenn dies zur Vermeidung einer Schieflast führt. Hierbei soll eine Schieflast bei gleichzeitigem Laden anderer Fahrzeuge vermieden werden, vorzugsweise werden auch weitere elektrische Verbraucher wie etwa im Gebäude etc. berücksichtigt, wenn die Last ermittelt und so die Schieflast vermieden wird.

Nach einer Ausführungsform umfasst die Bestimmung der (insbesondere Anzahl N der) Außenleiter des elektrofahrzeugseitigen Ausgangsanschlusses, welche für den Ladevorgang zu verwenden sind folgendes: Senden des Steuersignals als zweites Steuersignal an die Phasenwechselschaltung welches angibt, dass alle Außenleiter des elektrofahrzeugseitigen Ausgangsanschlusses und des versorgungsnetzseitigen Eingangsanschlusses miteinander verbunden werden sollen. Anschließend Durchführen der Phasenschaltung als zweite Phasenschaltung als Reaktion auf den Empfang des zweiten Steuersignals und daran anschließend, Bestimmung eines die aktuelle Ladeleistung des Elektrofahrzeugs charakterisierenden Wertes für jeden Außenleiter des elektrofahrzeugseitigen Ausgangsanschlusses oder des versorgungsnetzseitigen Eingangsanschlusses, wobei die Bestimmung der Außenleiter des elektrofahrzeugseitigen Ausgangsanschlusses, welche für den Ladevorgang verwendet werden, auf Basis der Werte erfolgt.

Vereinfacht ausgedrückt könnte hierdurch getestet werden, auf welchen Phasen das Elektrofahrzeug einen Ladevorgang durchführt. Wenn die zweite Phasenschaltung durchgeführt wird findet ein Ladevorgang des Elektrofahrzeugs statt, was sich in einer entsprechenden Belastung der hierbei verwendeten Außenleiter bemerkbar macht. Durch Feststellen, welche Außenleiter hierdurch belastet sind kann also gleichzeitig festgestellt werden, welche Außenleiter durch das Elektrofahrzeug für den Ladevorgang verwendet werden. Der besagte Wert, welche die aktuelle Ladeleistung des Elektrofahrzeugs charakterisiert kann ein Stromfluss oder ein Spannungsabfall sein. Dem Fachmann sind hierfür verschiedene Möglichkeiten bekannt.

Nach einer Ausführungsform umfasst die Bestimmung der insbesondere Anzahl N der Außenleiter des elektrofahrzeugseitigen Ausgangsanschlusses, welche für den Ladevorgang verwendet werden den Empfang einer Ladeanforderung des Elektrofahrzeuges, wobei die Ladeanforderung den oder die und/oder eine Anzahl der für den Ladevorgang zu verwendenden Außenleiter des elektrofahrzeugseitigen Ausgangsanschlusses angibt. Möglich ist auch, dass die Ladeanforderung eine Angabe bezüglich des Elektrofahrzeuges umfasst, wobei das Verfahren auf Basis der Angabe bezüglich des Elektrofahrzeugs eine Datenbankabfrage umfasst und als Antwort auf die Datenbankabfrage die Anzahl N und/oder die für den Ladevorgang zu verwendenden Außenleiter des elektrofahrzeugseitigen Ausgangsanschlusses resultiert.

Die Ladeanforderung zur Durchführung des Ladevorgangs des Elektrofahrzeugs könnte somit ein spezielles Testen, welche der Außenleiter für den Ladevorgang des Elektrofahrzeugs tatsächlich verwendet werden, überflüssig machen.

Nach einer Ausführungsform weist der Ladepunkt eine Schnittstelle zur Kommunikation mit einem Nutzer des zu ladenden Elektrofahrzeugs oder dem zu ladenden Elektrofahrzeug selbst auf, wobei über die Schnittstelle die Ladeanforderung für das Elektrofahrzeug empfangen wird. Möglich ist zum Beispiel, dass ein Nutzer des Elektrofahrzeugs sich bzw. sein Fahrzeug für den durchzuführenden Ladevorgang gegenüber dem zuwendenden Ladepunkt identifiziert. Über diese Identifikation kann daraufhin zum Beispiel der Ladepunkt über die besagte Datenbankabfrage abfragen, inwiefern bezüglich diese Identifikation die Information bezüglich der für den Ladevorgang zu verwendenden Außenleiter Beziehung mit der Anzahl N der für den Ladevorgang zu den Außenleiter vorliegt. Ist dies der Fall, kann diese Information dafür verwendet werden, um die obig beschriebenen Verfahrensschritte durchzuführen (z.B. die Bestimmung der N Außenleiter des versorgungsnetzseitigen Eingangsanschlusses umfasst, bei deren Verwendung für den Ladevorgang des Elektrofahrzeugs eine etwaige versorgungsnetzseitige Schieflast bezüglich aller Außenleiter des Elektro-Gebäudeanschlusses minimiert wird).

Ist die Datenbankabfrage negativ, könnte der Benutzer einmalig die Information bezüglich der entweder Anzahl N der zu verwendenden Außenleiter oder die Spezifikation der konkret zu verwendenden Außenleiter des elektrofahrzeugseitigen Ausgangsanschlusses manuell angeben, sodass darauf basierend die besagte Datenbank ergänzt werden kann.

Es sei angemerkt, dass zum Beispiel durch eine Norm festgelegt sein könnte, dass für einen einphasigen Ladevorgang grundsätzlich die Phase L1 des fahrzeugseitigen Ausgangsanschlusses zur Anwendung kommen muss. In diesem Fall wäre die Angabe N=1 auch gleichzeitig eine Angabe darüber, dass fahrzeugseitig L1 für den Ladevorgang zu wenden ist.

Nach einer Ausführungsform weist zumindest ein Teil der Ladepunkte eine Luftschnittstelle zur Drahtloskommunikation mit einem mobilen Endgerät auf. Über eine der Luftschnittstellen kann die Ladeanforderung für das Elektrofahrzeug empfangen werden. Dies könnte dann Vorteil haben, dass zuverlässig sichergestellt wird, dass der Wunsch eines Ladevorgangs durch das zu ladende Elektrofahrzeug oder durch den Benutzer desselben kommuniziert werden kann. Ein Beispiel hierfür wäre, dass sich der Ladepunkt in einer Tiefgarage befindet, welche von Haus aus weder über Mobilfunkempfang noch über WLAN-Empfang verfügt. In diesem Fall könnte es sich bei der Luftschnittstelle um eine so genannte Femtozelle, also eine Funkzelle mit minimaler räumlicher Ausdehnung zum Beispiel nach dem UMTS oder LTE oder GSM Standard handeln. Oder es könnte sich bei der Luftschnittstelle um einen WLAN Access Point handeln.

Zum Beispiel könnte der Benutzer über eine entsprechende Anwendung, zum Beispiel eine Anwendung auf seinem Mobiltelefon zuverlässig dem Ladepunkt denn der Wunsch des Ladevorgangs seines Elektrofahrzeugs mitteilen. Die Luftschnittstelle würde diese Ladeanforderung für das Elektrofahrzeug empfangen und über ein Netzwerkkabel an einen Freigabeserver senden. Dieser kann zum Beispiel im Internet in einer Cloud oder aber lokal im Bereich des den Elektro-Gebäudeanschluss aufweisenden Gebäudes oder gar der Ladepunkte implementiert sein. Der Freigabeserver könnte nach Empfang der Ladeanforderung prüfen, ob der Benutzer oder das Elektrofahrzeug für einen Ladevorgang berechtigt ist. Eine Berechtigung könnte beispielsweise davon abhängig gemacht werden, ob der Benutzer Geld für den Ladevorgang entrichtet hat.

In Abhängigkeit von der Entscheidung des Freigabeservers wird entweder eine Ladefreigabe oder keine Ladefreigabe vom Freigabeserver empfangen. Je nach Antwort des Freigabeserver wird daraufhin ein entsprechender Ladevorgang stattfinden oder auch nicht. Die Ladefreigabe kann das Ergebnis des Datenbankabfrage umfassen. Die Datenbank, welche abgefragt wird, kann z.B. im Freigabeserver oder an anderer Stelle hinterlegt sein.

Es angemerkt, dass allgemein unter einer Luftschnittstelle zur Drahtloskommunikation eine beliebige Schnittstelle verstanden wird, über welche eine Kommunikation des Elektrofahrzeugs oder eines mobilen Endgeräts bezüglich eines stattfindenden Ladevorgangs des stattfinden kann. Die Luftschnittstelle kann beispielsweise Übertragungsverfahren über RFID, Mobilfunk, WLAN, Bluetooth usw. ermöglichen.

Nach einer Ausführungsform ist der Ladepunkt ein Ladepunkt eines Satzes von Ladepunkten, wobei die Außenleiter der versorgungsnetzseitigen Eingangsanschlüsse der Ladepunkte mit entsprechenden Außenleitern eines mit Versorgungsnetzspannung versorgten Elektro-Gebäudeanschlusses (z.B. ein Dreiphasen Anschluss) verbunden sind. Die Ladepunkte können in diesem Fall parallel miteinander bezüglich der Außenleiter verdrahtet sein.

Die erste Außenleiterbestimmung zur Minimierung der Schieflast kann auf Basis einer Messung von die Schieflast repräsentativen Werten an den Außenleitern des Elektro-Gebäudeanschlusses durch eine Messeinrichtung erfolgen. In diesem Beispiel bestimmt die Messeinrichtung beispielsweise pro Außenleiter des Elektro-Gebäudeanschlusses, welcher Strom dort aktuell fließt. Die Messeinrichtung könnte dabei in der Lage sein, die Ermittlung der Schieflast in Bezug auf alle Verbraucher vorzunehmen, welche am Elektro-Gebäudeanschluss angeschlossen sind. Dies umfasst neben etwaigen Ladepunkten auch etwaige Stromverbraucher des Gebäude selbst, wie beispielsweise Heizung, Trockner, Waschmaschine, Herd usw.

Ferner ist es möglich, dass etwaige Ladevorgänge für alle Ladepunkte durch eine Kontrolleinheit gesteuert werden, wobei das Steuersignal durch die Kontrolleinheit gesendet wird. Die Kontrolleinheit kann entweder die erste Außenleiterbestimmung auf der Basis der Messung durch die Messeinrichtung vornehmen. Zum Beispiel kann die Kontrolleinheit die durch die Messeinrichtung bereitgestellten Messwerte auswerten oder die Messeinrichtung kann direkt die zu verwendenden Außenleiter des Elektro-Gebäudeanschlusses der Kontrolleinheit angeben.

Oder die erste Außenleiterbestimmung erfolgt durch die Kontrolleinheit auf Basis der für den oder die jeweiligen aktuellen Ladevorgänge und optional zukünftig anstehende Ladevorgänge durch die Ladepunkte verwendeten Ladeleistungen (und optional die dazu verwendeten Außenleiter des elektrofahrzeugseitigen Ausgangsanschlusses). In dieser Variante wird zum Beispiel davon ausgegangen, dass zur Schieflastminimierung die Belastung der Außenleiter des Elektro-Gebäudeanschlusses durch Verbraucher des Gebäudes vernachlässigbar sind. Die Kontrolleinheit weiß, wann mit welcher Ladeleistung und welcher Phase ein Ladevorgang von Elektrofahrzeugen stattfindet und kann darauf basierend abschätzen bzw. bestimmen, wie die einzelnen Außenleiter des Elektro-Gebäudeanschlusses dementsprechend belastet sind. Mit Kenntnis dieser Belastung kann nun die Kontrolleinheit die erste Außenleiterbestimmung durchführen, sodass insgesamt die Schieflast am Elektro-Gebäudeanschlusses minimiert ist.

Es sei angemerkt, dass diese Art der ersten Außenleiterbestimmung sowohl aktuell stattfindende Ladevorgänge an den Ladepunkten, als auch zukünftig anstehende Ladevorgänge an den Ladepunkten berücksichtigen kann. Wie weiter unten noch ausgeführt werden wird, könnte nämlich die Kontrolleinheit bei Kenntnis zukünftig anstehender Ladevorgänge in die Zukunft gerichtet planen, wann mit welcher Ladeleistung und welcher Phase ein entsprechender Ladevorgang eine welchem Ladepunkt durchzuführen ist.

Nach einer Ausführungsform umfasst das Verfahren ferner den Empfang einer oder mehrerer Ladespezifikationen für zumindest einen Teil von durch die Ladepunkte durchzuführenden Ladevorgängen, wobei die etwaigen Ladevorgänge für den oder die Ladepunkte durch die Kontrolleinheit auf der Basis der Ladespezifikationen gesteuert werden, wobei die Ladespezifikationen für zumindest einen Teil von durch die Ladepunkte durchzuführenden Ladevorgängen jeweils folgendes angeben: Bis wann der Ladevorgang abgeschlossen sein muss und/oder die erforderliche Lademenge und/oder einen gewünschten Ladezeitraum und/oder einer Ladekurve und eines aktuellen Ladezustands des an dem etwaigen Ladenpunkt zu ladenden Elektrofahrzeugs und/oder eine maximal zulässige Stromstärke zur Durchführung des Ladevorgangs. Optional kann die Ladespezifikationen auch angeben, ob es sich bei dem Ladevorgang um einen ein, zwei oder dreiphasigen Ladevorgang handelt bzw. mit welchem bzw. welchen Außenleitern des versorgungsnetzseitigen Eingangsanschlusses der Ladevorgang durchgeführt werden soll.

Die Ladekurve gibt dabei an, mit welcher Leistung (aus Strom bzw. Spannung) bei welchem Ladezustand des Fahrzeugs (z.B. zu n% vollständig geladen) maximal geladen werden kann.

Dies könnte dann Vorteil haben, dass Ladevorgänge für alle Ladepunkte optimiert durchgeführt werden können und gleichzeitig eine etwaige Schieflast am Elektro-Gebäudeanschluss minimiert werden kann. Über das Steuersignal kann jedem Ladepunkt zu jedem Zeitpunkt mitgeteilt werden, mit welcher Phase des Elektro-Gebäudeanschlusses und damit mit welchem Außenleiter des versorgungsnetzseitigen Eingangsanschlusses z.B. mit welcher maximalen Ladeleistung zu laden ist.

Nach einer Ausführungsform kann jeder der Ladepunkte als die Kontrolleinheit dienen, wobei der als Kontrolleinheit dienende Ladepunkt ein Master-Ladepunkt und die übrigen Ladepunkte Slave-Ladepunkte sind. Die Bestimmung, welcher der Ladepunkte der Master-Ladepunkt ist kann durch einen zufälliges aushandeln dieser Eigenschaft unter den Ladepunkten selbstständig erfolgen. Dies könnte den Vorteil haben, dass der Implementierungsaufwand minimiert wird, so dass sich ein entsprechender Errichter des Systems keine Gedanken machen muss, welcher der Ladepunkte nun als Master oder Slave dient.

Es ist jedoch auch möglich, dass die Bestimmung des Master-Ladepunkts nach einem vordefinierten Schema automatisch erfolgt. Da die Eigenschaft des Master-Ladepunkt ja die Bestimmung der Auswertung der Ladespezifikationen und damit einen gewissen Datenverarbeitungsaufwand (Rechenlast) mit sich bringt, resultiert dies zwangsläufig in einem höheren Verschleiß des Master-Ladepunkt im Vergleich zu den Slave-Ladepunkten. Ein vordefiniertes Schema wie beispielsweise ein Wechseln der Mastereigenschaft in vordefinierten Zeiträumen, zum Beispiel wöchentlich, verteilt den besagten Verschleiß gleichmäßig über alle Ladepunkte. Damit könnte insgesamt das Ausfallrisiko eines einzelnen Ladepunkts aufgrund hoher Beanspruchung durch Datenverarbeitung minimiert werden.

Nach einer Ausführungsform umfasst das Verfahren durch die Kontrolleinheit ferner auf Basis der Ladespezifikationen ein Bestimmen eines Ladezeitpunkts, wobei die Bestimmung so erfolgt, dass unter Berücksichtigung aller der Kontrolleinheit bekannten Ladespezifikationen zum Ladezeitpunkt eine etwaige versorgungsnetzseitige Schieflast bezüglich aller Außenleiter des Elektro-Gebäudeanschlusses minimiert wird, wobei das Steuersignal zu dem bestimmten Ladezeitpunkt gesendet wird.

Die Kenntnis, bis wann der entsprechende Ladevorgang abgeschlossen sein muss könnte hierbei im Rahmen der Planung helfen. Beispielhaft sei davon ausgegangen, dass drei Elektrofahrzeuge an drei Ladepunkten zu laden sind, wobei die Batterie von Fahrzeug 1 praktisch leer ist und mit allen Außenleitern zu laden ist und die Batterie von Fahrzeug 2 und 3 noch zu 75 % gefüllt sind und mit nur einem Außenleiter zu laden sind. Eine Ladekurve der drei Batterien könnte dabei so aussehen, dass bei niedrigem Ladezustand die maximale Leistungsaufnahme wesentlich höher ist als bei hohem Ladezustand. Wenn nun für Fahrzeug 2 und 3 der Ladevorgang später abgeschlossen sein muss als für Fahrzeug 1, wird die Kontrolleinheit zunächst das Steuersignal an den Ladepunkt für Fahrzeug 1 senden zum Laden auf allen Phasen mit z.B. maximaler Leistung. Da alle Phasen zum Laden verwendet werden, kann hieraus keine Schieflast resultieren.

Da außerdem zu Beginn Fahrzeuge 2 und 3 noch nicht geladen werden wird außerdem vermieden, dass eine Überlast am Elektro-Gebäudeanschluss aufgrund insgesamt zu hoher Ladeströme resultiert. Nach einem durch die Kontrolleinheit zu bestimmenden Zeitraum kann dann den Ladepunkten 2 und 3 über ein jeweiliges Steuersignal signalisiert werden, dass diese auf jeweils einer unterschiedlichen Phase (zum Beispiel Fahrzeug 2 auf L2 und Fahrzeug 3 auf L3) ebenfalls mit maximaler Leistung laden dürfen. In diesem Zusammenhang kann durch die Kontrolleinheit erzwungen werden, dass auch ein Fahrzeug, das sonst über drei Phasen geladen wird, ausnahmsweise nur auf einer einzigen Phase geladen wird.
Zu diesem Zeitpunkt wäre in dem genannten Beispiel der Gesamtladestrom für Fahrzeug 1 aufgrund des nunmehr höher vorhandenen Landzustandes zurückgegangen, sodass trotz des Ladens sämtlicher Fahrzeuge das Risiko einer Überlast des Elektro-Gebäudeanschlusses minimiert ist.

In dem genannten Beispiel wäre eine alternative Variante, dass alle 3 Fahrzeuge gleichzeitig geladen werden, jedoch für Fahrzeuge 2 und 3 die maximalen Ladeströme dynamisch in Abhängigkeit von aktuellen Ladezustand und damit dem Ladestrom für Fahrzeug 1 beschränkt werden. Auch hier wäre die Schieflast minimal und es könnte sichergestellt werden, dass eine Überlastung des Elektro-Gebäudeanschlusses ausgeschlossen wird oder das diesbezügliche Risiko minimiert wird.

Nach einer Ausführungsform umfasst das Verfahren durch die Kontrolleinheit ferner ein Bestimmen der für den Ladevorgang zulässigen Ladeleistung, wobei die Bestimmung der zulässigen Ladeleistung so erfolgt, dass unter Berücksichtigung aller der Kontrolleinheit bekannten Ladespezifikationen während dem Ladevorgang eine etwaige versorgungsnetzseitige Schieflast bezüglich aller Außenleiter des Elektro-Gebäudeanschlusses minimiert bleibt und optional eine maximal zulässige Belastung pro Außenleiter des Elektro-Gebäudeanschlusses nicht überschritten wird. Ziel könnte hier also sein, dass nebst der Bestimmung des Ladezeitpunkts noch zusätzlich die maximal zulässige Ladeleistung bestimmt wird. Dies wurde obig beispielhaft bezüglich der Minimierung des Risikos der Überlastung des Elektro-Gebäudeanschlusses diskutiert.

Die Kommunikation der zulässigen Ladeleistung könnte dadurch erfolgen, indem die Ladeleistung über das Steuersignal an den Ladepunkt oder die Phasenwechselschaltung übermittelt wird. Der Ladepunkt bzw. die Phasenwechselschaltung könnte daraufhin entweder selbst die Ladeleistung regeln (z.B. die für den Ladevorgang zur Verfügung stehende Stromstärke regeln) oder aber z.B. über das Ladekabel die seitens des Fahrzeugs zu verwendende Ladeleistung mitteilen. Im letzteren Fall würde das Fahrzeug die für den Ladevorgang verwendete Stromstärke selbst entsprechend der zulässigen Ladeleistung regeln.

Im Idealfall wird der Kontrolleinheit die Ladekurve und der aktuelle Ladezustand des bzw. der zu ladenden Elektrofahrzeuge mitgeteilt. Zum Beispiel kann das Elektrofahrzeug über die oben genannte Schnittstelle oder über eine Datenübertragung unter Verwendung des für den Ladevorgang zu verwenden Ladekabels (Ladekabel wäre hier gleichzeitig ein Datenkabel) Ladezustand und Ladekurve mitteilen. Die Ladekurve kann jedoch auch, wie ebenfalls obig diskutiert, als Teil der Ladefreigabe oder als Teil der Ladeanforderung der Kontrolleinheit übermittelt werden. Die Ladefreigabe oder die Ladeanforderung können also die
Ladekurve und/oder den Ladezustand in Form der Ladespezifikation umfassen.

Nach einer Ausführungsform umfasst das Verfahren ferner ein Bestimmen des aktuellen Ladezustands des zu ladenden Elektrofahrzeugs, umfassend: Senden des Steuersignals als drittes Steuersignal an die Phasenwechselschaltung welches angibt, dass die z.B. mittels der ersten und/oder zweiten Außenleiterbestimmung bestimmten oder sogar alle Außenleiter des elektrofahrzeugseitigen Ausgangsanschlusses und des für den Ladevorgang verwendeten versorgungsnetzseitigen Eingangsanschlusses miteinander verbunden werden sollen; Durchführen der Phasenschaltung als dritte Phasenschaltung als Reaktion auf den Empfang des dritten Steuersignals (und z.B. Durchführen Ladevorgang mit maximaler Ladeleistung); Bestimmung der daraus resultierenden aktuellen Ladeleistung des Elektrofahrzeugs und Bestimmung des aktuellen Ladezustands aus der aktuellen Ladeleistung und dem Ladeprofil des zu ladenden Elektrofahrzeugs.

Im Prinzip wird hier die Antwort der zu ladenden Batterie getestet, wobei in vielen Fällen durch Auswertung insbesondere des Verlaufs der z.B. maximal möglichen Ladeleistung über einen vordefinierten kurzen Zeitraum (z.B. weniger als 2 Minuten, insbesondere weniger als 1 Minute) direkte Rückschlüsse auf den aktuellen Ladezustand der Batterie vorgenommen werden können.

In einem weiteren Aspekt betrifft die Erfindung ein Verfahren zum Laden eines Elektrofahrzeugs an einem Ladepunkt, wobei der Ladepunkt mit entsprechenden Außenleitern eines mit Versorgungsnetzspannung versorgten Elektro-Gebäudeanschluss verbunden ist, wobei etwaige Ladevorgänge für den Ladepunkt durch eine Kontrolleinheit auf der Basis von Ladespezifikationen gesteuert wird, wobei die Ladespezifikationen für die durchzuführenden Ladevorgänge eine Ladekurve und einen aktuellen Ladezustand des zu ladenden Elektrofahrzeugs angeben, wobei das Verfahren umfasst: Bestimmung auf Basis der Ladespezifikationen der Außenleiter des versorgungsnetzseitigen Eingangsanschlusses und optional eines Ladezeitpunkts, bei deren Verwendung für den Ladevorgang des Elektrofahrzeugs eine etwaige versorgungsnetzseitige Schieflast bezüglich aller Außenleiter des Elektro-Gebäudeanschlusses minimiert wird; Veranlassen des Ladepunkts zu dem Ladevorgang des Elektrofahrzeugs durch Senden eines Steuersignals z.B. zu dem Ladezeitpunkt, wobei das Steuersignal die bestimmten (für den Ladevorgang zu verwendenden) Außenleiter angibt.

Nach einer Ausführungsform umfasst das Verfahren ferner ein Bestimmen des aktuellen Ladezustands des zu ladenden Elektrofahrzeugs, umfassend: Laden des Elektrofahrzeugs insbesondere mit maximal möglicher Ladeleistung; Bestimmung der aktuellen Ladeleistung des Elektrofahrzeugs und Bestimmung des aktuellen Ladezustands aus der aktuellen Ladeleistung und
dem Ladeprofil des zu ladenden Elektrofahrzeugs.

In einem weiteren Aspekt betrifft die Erfindung eine Kontrolleinheit zum Laden eines Elektrofahrzeugs über einen Ladepunkt, der Ladepunkt mit entsprechenden Außenleitern eines mit Versorgungsnetzspannung versorgten Elektro-Gebäudeanschluss verbunden ist, wobei die Kontrolleinheit dazu ausgebildet ist, etwaige Ladevorgänge auf der Basis von Ladespezifikationen zu steuern, wobei die Ladespezifikationen eine Ladekurve und einen aktuellen Ladezustand des zu ladenden Elektrofahrzeugs angeben, wobei die Kontrolleinheit ausgebildet ist zum: Bestimmen auf Basis der Ladespezifikationen der Außenleiter des versorgungsnetzseitigen Eingangsanschlusses, bei deren Verwendung für den Ladevorgang des Elektrofahrzeugs eine etwaige versorgungsnetzseitige Schieflast bezüglich aller Außenleiter des Elektro-Gebäudeanschlusses minimiert wird und Veranlassen des Ladepunkts für den Ladevorgang des Elektrofahrzeugs durch Senden eines Steuersignals, wobei das Steuersignal die zu verwendenden Außenleiter angibt.

In einem weiteren Aspekt betrifft die Erfindung ein System zum Laden eines Elektrofahrzeugs an einem Ladepunkt, wobei das System eine Phasenwechselschaltung umfasst, wobei die Phasenwechselschaltung aufweist: Einen versorgungsnetzseitigen Eingangsanschluss mit Außenleitern und einen elektrofahrzeugseitigen Ausgangsanschluss mit Außenleitern (wobei das Fahrzeug am Ausgangsanschluss für den Ladevorgang anschließbar ist), ein Schütz und eine Relaisanordnung, wobei die Relaisanordnung über Schaltkontakte des Schützes mit dem Eingangsanschluss verbunden ist, und wobei die Relaisanordnung mit dem Ausgangsanschluss verbunden ist, wobei die Phasenwechselschaltung ausgebildet ist zum:
- Empfang eines Steuersignals zum Durchführen des Ladevorgangs des Elektrofahrzeugs, wobei das Steuersignal angibt, welcher oder welche Außenleiter des versorgungsnetzseitigen Eingangsanschlusses und des elektrofahrzeugseitigen Ausgangsanschlusses miteinander zu verbinden sind,
- als Reaktion auf den Empfang des Steuersignals, Durchführen einer Phasenschaltung welche umfasst: Miteinander Verbinden des oder der Außenleiter des Eingangsanschlusses und des Ausgangsanschlusses durch die Relaisanordnung entsprechend dem Steuersignal und nach dem Verbinden, Schließen der Schaltkontakte.

In einem weiteren Aspekt betrifft die Erfindung ein Computerprogrammprodukt mit von einem oder mehreren verteilten Prozessoren ausführbaren Instruktionen, wobei die Ausführung der Instruktionen die Prozessoren zur Durchführung des obig beschriebenen Verfahrens veranlasst.

Es sei angemerkt, dass die obig beschriebenen Ausführungsformen der Erfindung in beliebiger Weise miteinander kombiniert werden können, solange sich die kombinierten Ausführungsformen nicht gegenseitig ausschließen.

Im Folgenden werden Ausführungsform der Erfindung andere Zeichnungen näher erläutert. Es zeigen:
Fig. 1 ein System zum Laden eines Elektrofahrzeugs mit Ladepunkten und Elektro-Gebäudeanschluss,
Fig. 2 eine schematische Ansicht einer Phasenwechselschaltung,
Fig. 3 eine schematische Ansicht einer Kontrolleinheit,
Fig. 4 eine schematische Ansicht einer Phasenwechselschaltung,
Fig. 5 ein Flussdiagramm eines Verfahrens zum Laden eines Elektrofahrzeugs,
Fig. 6 ein weiteres Flussdiagramm eines Verfahrens zum Laden eines Elektrofahrzeugs.

Im Folgenden werden einander ähnliche Elemente mit den gleichen Bezugszeichen gekennzeichnet.

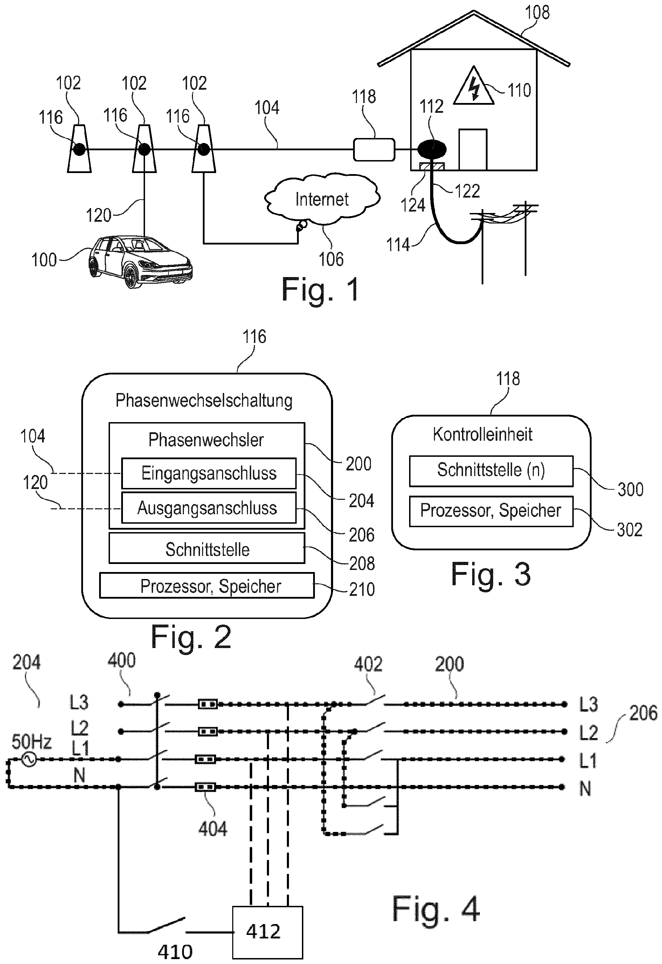

Figur 1 zeigt ein System zum Laden eines Elektrofahrzeugs 100 an einem Ladepunkt 102 eines Satzes von mehreren Ladepunkten 102 mittels eines Ladekabels 120. das Ladekabel ist einerseits mit dem Elektrofahrzeug und andererseits mit einem Ausgangsanschluss des Ladepunkts 102 verbunden. Das Laden soll über einen mit Versorgungsnetzspannung eines öffentlichen Stromnetzes 114 versorgten Elektro-Gebäudeanschluss 112 erfolgen. Der Anschluss 112 befindet sich am oder in einem Gebäude 108. Ohne Beschränkung der Allgemeinheit sei im Folgenden davon ausgegangen, dass es sich bei dem Gebäude 108 um ein privates Wohnhaus handelt. Der Elektro-Gebäudeanschluss 112 ist über ein Stromkabel 122 mit dem öffentlichen Stromnetz 120 verbunden. Eine Stromleitung 104 verbindet den Elektro-Gebäudeanschluss 112 mit den Eingangsanschlüssen aller Ladepunkte 102.

Nebst den Ladepunkten 102 versorgt der Elektro-Gebäudeanschluss 112 auch Stromverbraucher 110 des Hauses, zum Beispiel eine Kochstelle, eine Waschmaschine, einen Wäschetrockner, Lampen usw.

Figur 1 zeigt ferner eine optionale Strommesseinrichtung 124, welche permanent den aktuell am Gebäudeanschluss 112 fließenden Strom bestimmt und Informationen hierüber an in einem oder mehreren der Ladepunkte 102 integrierten Kontrolleinheiten oder eine spezielle zu den Ladepunkten externe Kontrolleinheit 118 sendet. Ferner können die Ladepunkte 102 in der Lage sein, über das Internet z.B. mit einem Freigabeserver zu kommunizieren. Im Beispiel der Figur 1 befindet sich der nicht näher dargestellte Freigabeserver in einer Cloud, ist also über das Internet 106 erreichbar. Es ist aber auch möglich, dass der Freigabeserver in einen der Ladepunkte integriert ist. Der Zweck des Freigabeservers wird nachfolgend erläutert. Ebenfalls im Internet befindlich kann eine Datenbank sein, welche Informationen bezüglich der zu ladenden Elektrofahrzeuge umfasst, wie zum Beispiel die für Ladevorgänge verwendenden Außenleiter des elektrofahrzeugseitigen Ausgangsanschlusses und/oder die Anzahl N der für den Ladevorgang zu verwenden Außenleiter des elektrofahrzeugseitigen Ausgangsanschlusses.

Im Folgenden sei beispielhaft angenommen, dass ein Fahrer des Elektrofahrzeugs 100 den Wunsch hat, sein Fahrzeug an dem mittleren der in Figur 1 gezeigten drei Ladepunkte mit Strom zu betanken. Ohne Beschränkung der Allgemeinheit sei im Folgenden davon ausgegangen, dass ein Freigabeserver zum Einsatz kommt. Dies ist jedoch nicht zwingend notwendig und sämtliche nachfolgend erläuterten Schritte können auch beispielsweise durch einen der Ladepunkte 102 selbst durchgeführt werden.

Zum Zweck des Ladevorgangs verbindet der Fahrer des Fahrzeugs 100 sein Fahrzeug zum Beispiel mittels eines Ladekabels 120 mit dem entsprechenden Ladepunkt 102. Er könnte nun eine Ladeanforderung an einen Freigabeserver richten. Zum Beispiel verfügt er hierzu über eine entsprechende Anwendung auf seinem Smartphone. Das Smartphone könnte über eine bereits vorhandenes mobiles Telekommunikationsnetzwerk die Anfrage an den Freigabeserver richten. Optional ist es möglich, dass einer oder mehrerer der Ladepunkte 102 eine Luftschnittstelle aufweisen, mit dem Internet 106 verbunden ist. So könnte es möglich sein, dass die Anwendung des Smartphones unter Verwendung der Luftschnittstelle mit dem Freigabeserver kommuniziert.

Nach Empfang der Ladeanforderung wird der Freigabeserver prüfen, ob der Benutzer des Fahrzeugs 100 dazu berechtigt ist, einen Ladevorgang durchzuführen. Eine solche Prüfung könnte beispielsweise einen entsprechenden Bezahlvorgang umfassen. Wenn der Freigabeserver feststellt, dass der Benutzer zum Aufladen seines Fahrzeugs am Ladepunkt 102 berechtigt ist, sendet der Freigabeserver eine entsprechende Ladefreigabe über das Internet an den Ladepunkt 102. Als Reaktion auf den Empfang der Ladefreigabe wird daraufhin der Ladepunkt den Ladevorgang des Fahrzeugs 100 freischalten. Zum Ladevorgang an sich wird Strom vom Gebäudeanschluss 112 über das Stromkabel 104 zum Ladepunkt 102 und von dort zum Fahrzeug 100 fließen. Dies führt zum Aufladen einer Batterie des Fahrzeugs 100.

Jeder der Ladepunkte 102 kann über eine Phasenwechselschaltung 116 verfügen. Dies ist in der Lage, entweder über eine spezielle Steuerleitung oder über ein Netzwerkkabel von einer der Kontrolleinheiten der Ladepunkte oder der externen Kontrolleinheit 118 ein Steuersignal empfangen. Das Steuersignal gibt an, in welcher Weise die elektrofahrzeugseitigen Außenleiter der Leitung 120 mit den versorgungsnetzseitigen Außenleiter des Eingangsanschlusses und damit der Leitung 104 zur verbinden sind. Nach Empfang des Steuersignals wird die Phasenwechselschaltung die im Steuersignal angegebenen jeweiligen Außenleiter für den Ladevorgang miteinander verbinden.

Figur 2 zeigt eine schematische Ansicht einer Phasenwechselschaltung 116, wobei diese eine Schnittstelle 208 zum Empfang des Steuersignals, sowie einen Prozessor und einen Speicher 210 mit darin enthaltenen durch den Prozessor ausführbaren Instruktionen umfasst. Die Ausführung der Instruktionen führt insbesondere zur Ansteuerung des Phasenwechslers gemäß den im empfangenen Steuersignal angegebenen miteinander zu verbindenden Außenleitern. Bei diesen Außenleitern handelt es sich um die Außenleiter 104 des Eingangsanschlusses 204 des Phasenwechslers und um die Außenleiter des Ausgangsanschlusses 206. Die Außenleiter des Ausgangsanschlusses 206 sind dabei Teil der Leitung 120, mit welcher das Fahrzeug 100 am Ladepunkt 102 für den Ladevorgang angeschlossen ist. Die Außenleiter des Eingangsanschlusses 204 sind jene der Leitung 104, über welche der Ladepunkt und auch die übrigen Ladepunkte mit dem Hausanschluss 112 verbunden sind. Typischerweise besteht eine solch jeweilige Leitung aus 4 Außenleitern und einem Nullleiter. Der Phasenwechsler 200 ist in der Lage, basierend auf dem empfangenen Signal entsprechende Außenleiter der Leitung 104 auf entsprechende Außenleiter der Leitung 120 zu schalten.

Das entsprechende Steuersignal kann von verschiedenen Einheiten erzeugt werden. Wie oben bereits erwähnt, kann dies durch eine der Kontrolleinheiten der Ladepunkte oder durch die externe Kontrolleinheit 118 erfolgen. Möglich ist jedoch auch, dass ein anderes in einen oder mehrere der Ladepunkte 102 integriertes Modul oder ein anderes externes Modul dieses Steuersignal erzeugt.

Im einfachsten Fall kann es sich bei dem Steuersignal um ein Signal handeln, welches die Phasenwechselschaltung über die Schnittstelle 208 veranlasst, in einer 1 zu 1 Konfiguration alle Außenleiter des Eingangsanschlusses 204 mit den entsprechenden Außenleitern des Ausgangsanschlusses 206 zu verbinden. In diesem Fall wäre L1 mit L1 verbunden, L2 mit L2 verbunden und L3 mit L3 verbunden.

Figur 3 zeigt eine schematische Ansicht einer Kontrolleinheit 118, wobei diese über eine oder mehrere Schnittstellen 300, sowie einen Prozessor und einen Speicher mit durch den Prozessor ausführbaren Instruktionen zur Steuerung der Kontrolleinheit 118 aufweist. In der Variante, in welcher die Kontrolleinheit das Steuersignal erzeugt wird dieses Steuersignal über die Schnittstelle 300 an die Schnittstelle 208 der Phasenwechselschaltung kommuniziert. Die Kontrolleinheit 118 kann über die Schnittstelle 300 Informationen bezüglich einer etwaigen versorgungsnetzseitige Schieflast bezüglich aller Außenleiter des Elektrogebäudeanschlusses 112 empfangen. Ferner kann die Kontrolleinheit 118 über die Schnittstelle 300 Informationen bezüglich des oder der durch die Ladepunkte 102 durchzuführende Ladevorgänge erhalten. Bei diesen Informationen kann es sich beispielsweise um eine Ladeanforderung und/oder Ladespezifikationen handeln.

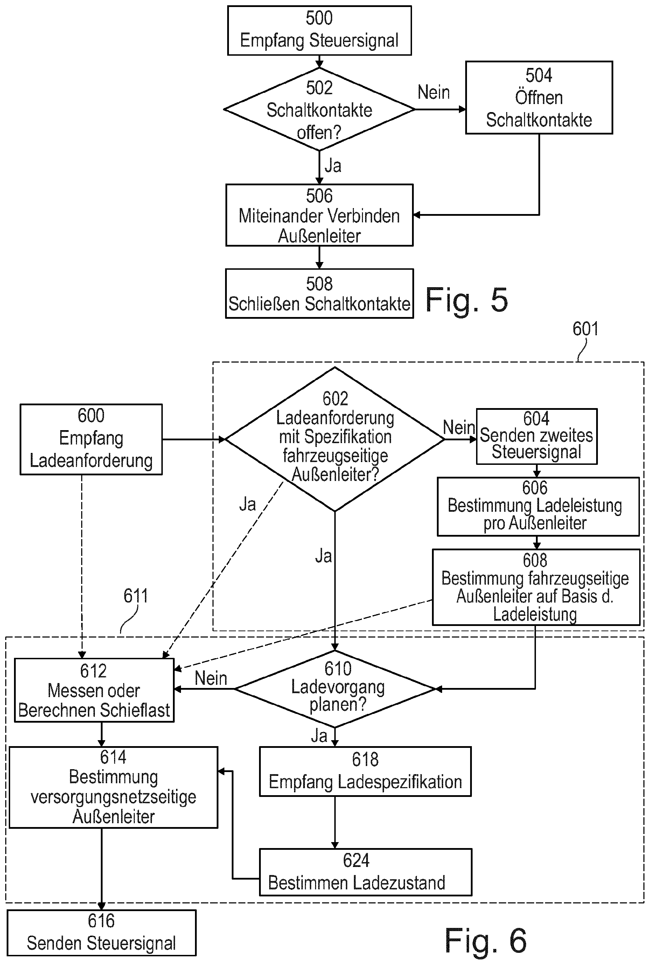

Figur 4 zeigt eine schematische Ansicht des Phasenwechslers 200. Die Funktionsweise des Phasenwechsel aus dem folgenden in Zusammenschau mit dem Flussdiagramm der Figur 5 erklärt.

Der Phasenwechsler 200 verfügt über einen Eingangsanschluss 204 und einen Ausgangsanschluss 206. Jeder dieser Anschlüsse verfügt über einen Nullleiter N und drei Außenleiter L1, L2 und L3. Ferner ist eine Relaisanordnung 402 mit z.B. mindestens fünf Relais (vorzugsweise genau fünf Relais bezüglich der Leiter L1, L2 und L3) und ein Schütz 400 mit vier Schaltkontakten vorgesehen. Die Schaltkontakte 400 des Schützes schalten die drei Außenleiter und den Nullleiter insbesondere gemeinsam und gleichzeitig und ermöglichen eine elektrische Verbindung zwischen dem Eingangsanschluss 204 und der Relaisanordnung 402. Während z.B. der Nullleiter N direkt vom Schütz 400 zum Ausgangsanschluss 206 durchgeschleift ist, können über die Relais die drei Außenleiter geschaltet werden.

In der in Figur 4 gezeigten Variante besteht auf Seiten des Ausgangsanschlusses 206 bezüglich der Außenleiter L2 und L3 nur die Möglichkeit, die entsprechende elektrische Verbindung zum jeweiligen Außenleiter L2 bzw. L3 des Eingangsanschlusses 204 zu schalten, d. h. eine elektrische Verbindung herzustellen oder zu trennen. Dies wird durch die beiden oberen Relais der Relaisanordnung 402 in der Figur 4 realisiert.

Die drei unteren Relais dienen dazu, wahlweise einen der drei Außenleiter des Eingangsanschlusses 204 auf L1 des Ausgangsanschlusses 206 zu schalten.

Diese fünf Relais genügen zur Umsetzung aller Schaltungsmöglichkeiten (bei prinzipieller Austauschbarkeit der Rollen der Außenleiter L1, L2 und L3, da diese sich funktionell nicht unterscheiden), wobei dem Außenleiter L1 im vorliegenden Beispiel eine hervorgehobene Rolle zukommt.

Es versteht sich, dass das Prinzip des wahlweisen Schaltens eines beliebigen Außenleiters des Eingangsanschlusses auf einen Außenleiter des Ausgangsanschlusses konstruktiv ebenfalls bezüglich L2 und L3 des Ausgangsanschlusses umgesetzt werden kann. Die hervorgehobene Rolle kann also auch einem der anderen Außenleitern L2 oder L3 neben L1 zukommen. Durch die hervorgehobene Rolle eines der Außenleiter kann auf weitere Relais verzichtet werden, das Vorsehen von nur genau (diesen) fünf Relais ist also besonders wirtschaftlich.

Die Phasenwechselschaltung 116 verfügt über eine interne Überwachung, die dafür sorgt, dass z.B. wenn L2 oder L3 des Eingangsanschlusses mit L1 des Ausgangsanschlusses verschaltet ist die beiden oberen Relais der Relaisanordnung 402 geöffnet sind. Ferner gezeigt in Figur 4 sind optionale Fehlerstromschutzschalter (FI-Schalter) 404, welche auf den elektrischen Verbindungen zwischen dem Schütz 400 und der Relaisanordnung 402 angeordnet sind.

Die Funktionsweise der Phasenwechselschaltung 116 beim Empfang eines Steuersignals wird im Folgenden mit Blick auf Figur 5 näher erläutert. In Schritt 500 wird über die Schnittstelle 208 ein Steuersignal empfangen. Ohne Beschränkung der Allgemeinheit sei im Folgenden davon ausgegangen, dass das Steuersignal angibt, dass L3 des Eingangsanschlusses 204 mit L1 des Ausgangsanschlusses 206 zu verbinden ist. Daraufhin prüft in Schritt 502 die Phasenwechselschaltung 116, ob die Schaltkontakte des Schützes 400 offen sind. Wenn dies der Fall ist, so erfolgt anschließend in Schritt 506 das Miteinander Verbinden der Außenleiter L3 (Eingangsanschluss) und L1 (Ausgangsanschluss). Erst nachdem vorzugsweise bestätigt ist, dass tatsächlich die Relais der Relaisanordnung 402 entsprechend dieser Schaltung vorgenommen haben erfolgt in Schritt 508 das Schließen der Schaltkontakte des Schützes 400. Erst wenn diese Schaltkontakte des Relais 400 Schließen, fliesen die beim typischen Ladevorgang von Fahrzeugen hohe Ströme. Dies spielte jedoch keine Rolle, da ein Schütz für das Schalten unter hoher Last ausgelegt ist.

Die Relais der Relaisanordnung 402 hingegen schalten ausschließlich bei Nulllast, sodass diese entsprechend schwach und damit kostengünstig dimensioniert werden können. Um dies sicherzustellen und falls in Schritt 502 festgestellt wird, dass die Schaltkontakte des Schützes 400 nicht offen sind, so erfolgt nach Schritt 502 zunächst das Öffnen der Schaltkontakte des Schützes in Schritt 504. Erst wenn Weise bestätigt ist, zum Beispiel durch eine interne Kontrollschaltung der Phasenwechselschaltung 116, dass die Schaltkontakte tatsächlich geöffnet sind, erfolgt anschließend Schritt 506 und 508.

Optional erfolgt zwischen den Schritten 506 und 508 noch eine Fehlerstromprüfung (in Fig. 5 nicht gezeigter "Schritt 507"). Zu diesem Zweck kann eine Prüfeinrichtung (Sicherheitsmodul 412 in Fig. 4) und dazu ein Hilfsrelais 410 (siehe ebenfalls in Fig. 4) vorgesehen sein, über welches dem Sicherheitsmodul 412 das Referenzpotential des versorgungsnetzseitigen Nullleiters zur Verfügung gestellt wird. Dem Sicherheitsmodul 412 steht eine Betriebsspannung seitens einer niederohmigen Spannungsquelle zur Verfügung (in Fig. 4 nicht dargestellt). Es prüft bezüglich jedem der Elektrofahrzeugseitigen Leiter L1, L2 und L3 auf Fehlerstrom bzw. auf Kurzschluss. Das Hilfsrelais 410 überbrückt das zu den Nullleitern zugehörige Schütz. In der z.B. Fehlerstromprüfung bzw. Kurzschlussprüfung ist dann enthalten: das Schließen dieses Hilfsrelais 410, der nachfolgende Betrieb des Sicherheitsmoduls 412 und bei Feststellung des Nichtvorhandenseins eines Fehlerstroms/Kurzschlusses das Wiederöffnen des Hilfsrelais 410. Im Schritt 508 wird sodann regulär der versorgungsnetzseitige Nullleiter über das zugehörige Schütz (und ggf. ein regulär vorhandenes Nulleiterhauptrelais, das von dem Hilfsrelais verschieden ist) mit dem Elektrofahrzeugseitigen Nullleiter verbunden, also mit dem Fahrzeug selbst.

Ein Zweck der Phasenwechselschaltung 116 kann darin liegen, dass eine Möglichkeit geschaffen wird, einen oder mehrere gewünschte Außenleiter des Ausgangsanschlusses 206 und damit des Ladekabels 120 mit beliebigen Außenleitern des Eingangsanschlusses 204 und damit der Leitung 104 zu verbinden. Erfolgt dies in geeigneter Weise, so kann eine etwaige versorgungsnetzseitige Schieflast am Hausanschluss 112 minimiert werden. Findet beispielsweise durch Verbraucher 110 im Haus 108 augenblicklich eine starke Belastung der Phase L1 des Hausanschlusses 112 statt, so könnte die zur Erzeugung des Steuersignals zuständige Kontrolleinheit 116 bzw. 118 für den anstehenden Ladevorgang des Fahrzeugs 100 der Phasenwechselschaltung 116 ein Steuersignal übermitteln, welches angibt, dass für den entstehenden einphasigen Ladevorgang (über L1 des Ausgangsanschlusses 206) zum Beispiel die Phase L2 des Eingangsanschlusses 204 zu verwenden ist. Im obig erwähnten Schritt 506 wären dann dementsprechend L2 eingangsseitig und L1 ausgangsseitig miteinander verbunden.

Bezüglich der Bestimmung, welche Eingangsanschlussseitigen Außenleiter mit welchen Ausgangsanschlussseitigen Außenleitern durch die Phasenwechselschaltung zu verbinden sind und der entsprechenden Erzeugung des Steuersignals gibt es vielfältige Möglichkeiten. Das Flussdiagramm der Figur 6 gibt einen allgemeinen Überblick über einige der Möglichkeiten, wobei nicht alle Schritte der Figur 6 zwingend notwendig sind.

Ohne Beschränkung der Allgemeinheit sei im Folgenden davon ausgegangen, dass das in Figur 6 beschriebene Verfahren durch eine der in den Ladepunkten integrierten Kontrolleinheit 116 (siehe Fig. 1) durchgeführt wird. Allgemein kann das Verfahren jedoch durch einen der Ladepunkte 102 (zum Beispiel einen Master-Ladepunkt) oder ein externes Modul 118 oder eine im Ladepunkt integrierte Kontrolleinheit 116 durchgeführt werden oder einzelne Verfahrensschritte können verteilt auf verschiedene Ladepunkte, das externe Modul oder einen oder mehrere Kontrolleinheiten durchgeführt werden.

Das Verfahren beginnt in Schritt 600 mit dem Empfang einer Ladeanforderung. Beispielsweise kann eine Benutzer das zu ladenden Fahrzeugs 100 an einer Eingabeschnittstelle des Ladepunkts eine Eingabe vornehmen, welche einen Ladevorgang des Fahrzeugs 100 anfordert. Dies kann beispielsweise über eine Benutzerschnittstelle wie ein Touchpanel erfolgen, oder durch Drahtloskommunikation beispielsweise unter Verwendung einer App. Im Falle der Drahtloskommunikation kann eine direkte Kommunikation mit dem Ladepunkt 102 stattfinden oder es kann eine Kommunikation über das Internet 106 stattfinden.

Typischerweise wird nach Empfang der Ladeanforderung zunächst überprüft werden, ob das Fahrzeug 100 für einen Ladevorgang freigegeben ist. Hierbei spielt es keine Rolle, ob diese Überprüfung durch den Ladepunkt 102 über einen entsprechenden Freigabeserver, welche beispielsweise im Internet 106 angeordnet ist, vorgenommen wird. Es ist auch möglich, dass die Ladeanforderung als Teil einer Ladefreigabe durch den Ladepunkt 102 direkt empfangen wird, ohne dass es hierfür erforderlich ist, dass der Ladepunkt 102 sich zunächst eine Ladefreigabe von einem entsprechenden Freigabeserver abholt. Diesem Zweck könnte beispielsweise ein Benutzer des Fahrzeugs 100 direkt dem Freigabeserver kommunizieren und diesen dazu veranlassen, die Ladeanforderung zusammen mit Ladefreigabe (zum Beispiel nach Zahlen eines entsprechenden Geldbetrags) an die Ladesäule 102 zu übermitteln.

Im einfachsten Fall springt das Verfahren nach Schritt 600 direkt zu Schritt 612. In Schritt 612 wird eine Schieflast des Elektro-Gebäudeanschlusses (Figur 1, 112) berechnet oder gemessen. Ein Messen der Schieflast kann beispielsweise durch die Messvorrichtung 124 erfolgen. Eine Berechnung der Schieflast kann durch einen der Ladepunkte 102 (zum Beispiel einen Master-Ladepunkt) oder ein externes Modul oder die Kontrolleinheit 118 erfolgen. Im einfachsten Fall kann das Berechnen der Schieflast alle aktuell durch die Ladepunkte 102 stattfindenden Ladevorgänge inklusive der jeweilig hierfür verwendeten Außenleiter und optional Ladeströme berücksichtigen.

Mit dem Ziel, eine etwaige Schieflast zu minimieren erfolgt daraufhin in Schritt 614 die Bestimmung der versorgungsnetzseitigen Außenleiter, bei deren Verwendung eine etwaige Schieflast möglichst minimal gehalten wird, also minimiert wird. Diese Information bezüglich der Außenleiter wird daraufhin in Schritt 616 als Steuersignal oder als Teil des Steuersignals an die entsprechende Phasenwechselschaltung 116 des Ladepunkts 102 gesendet.

Der Block 601 beschreibt verschiedene Schritte, welche durchgeführt werden können, um die für den Ladevorgang zu verwendenden Außenleiter des elektrofahrzeugseitigen Ausgangsanschlusses festzulegen. Block 601 beginnt mit Schritt 602 unter Überprüfung, ob die zuvor empfangene Ladeanforderung eine Spezifikation der fahrzeugseitigen Außenleiter enthält. Beispielsweise könnte die Ladeanforderung entweder eine konkrete Angabe der Außenleiter beinhalten (konkret z.B. "L1"), oder die Ladeanforderung kann Informationen bezüglich des zu ladenden Elektrofahrzeugs, zum Beispiel eine Typangabe, beinhalten. In diesem Fall könnte mittels einer nicht näher dargestellten Datenbankabfrage zum Beispiel durch die Kontrolleinheit aus einer Datenbank abgefragt werden, welche oder wie viele Außenleiter für den anstehenden Ladevorgang verwendet werden können. Normativ könnte festgelegt sein, dass je nach Anzahl der für den Ladevorgang zu verwendenden Außenleiter bestimmte Phasen des elektrofahrzeugseitigen Ausgangsanschlusses Verwendung finden müssen. Zum Beispiel wäre die Angabe "Verwendung von nur einem Außenleiter" in bestimmten Szenarien gleichbedeutend für "Verwendung von L1".

Je nach Implementierung kann das Verfahren bei Kenntnis der Spezifikation der fahrzeugseitigen Außenleiter direkt zu Schritt 612 springen. Sollte keine Spezifikation der fahrzeugseitigen Außenleiter vorhanden sein, könnte festgestellt werden, mit welchen Außenleiter das Fahrzeug einen Ladevorgang durchführen wird. In diesem Fall würde zum Beispiel in Schritt 6 zu 4 ein zweites Steuersignal an die Phasenwechselschaltung gesendet werden, wobei dieses zweite Steuersignal angibt, dass für einen kurzen Zeitraum (hier genügen unter Umständen wenige Sekunden) einen Ladevorgang des Elektrofahrzeugs mit allen Phasen bzw. Außenleitern stattzufinden hat. In Schritt 606 wird daraufhin die Ladeleistung pro Außenleiter bestimmt, wobei hier im einfachsten Fall eine Feststellung reicht, auf welchen elektrofahrzeugseitigen Außenleitern überhaupt ein Ladestrom fließt. Beispielsweise eine Fahrzeug nur einphasig, so würde kein Stromfluss auf den übrigen Außenleiter vorhanden sein. In einer anderen Variante wäre es möglich, beispielsweise am Hausanschluss durch eine dort vorhandene Messeinrichtung (zum Beispiel die Messeinrichtung 124 der Figur 1) festzustellen, auf welchem Außenleiter aufgrund des gerade stattfindenden Ladevorgangs eine Veränderung von Stromfluss oder Spannung stattgefunden hat. Um eine vereinfachte Zuordnung zwischen versorgungsnetzseitigen Außenleitern und fahrzeugseitigen Außenleitern vorzunehmen, gibt hierzu das zweite Steuersignal aus Schritt 604 möglichst an, dass die entsprechenden Außenleiter in einer 1:1 Konfiguration miteinander verbunden sind (d.h. L1 versorgungsnetzseitigen Außenleiter auf L1 fahrzeugseitiger Außenleiter, L2 versorgungsnetzseitigen Außenleiter auf L2 fahrzeugseitiger Außenleiter usw.).

In Schritt 608 wird schließlich auf Basis der Information bezüglich der Ladeleistung bestimmt, welche fahrzeugseitigen Außenleiter tatsächlich für den Ladevorgang Verwendung finden. Damit ist Block 601 abgeschlossen. Das Verfahren kann sich auch hier anschließend unmittelbar mit Schritt 612 fortsetzen.

In einer anderen Variante ist es möglich, dass entweder bei Kenntnis der Spezifikation der fahrzeugseitigen Außenleiter in Schritt 602 bzw. nach Abschluss von Schritt 608 zunächst eine Feststellung stattfindet, ob eine Ladevorgang zu planen ist. Dies entspricht Schritt 610. Ein Kriterium hierfür könnte zum Beispiel sein, dass die Ladeanforderung explizit eine Planung des Ladevorgangs fordert, oder einer generellen Einstellung der Kontrolleinheit, welche das Verfahren durchführt, dass grundsätzlich wenn möglich eine Planung stattzufinden hat. Schritt 610 ist jedoch optional und das Verfahren kann auch unmittelbar zu Schritt 618 springen.

Soll nämlich - falls möglich - eine Planung des anstehenden Ladevorgangs stattfinden, so erfolgt dies auf Basis einer in Schritt 618 empfangenen Ladespezifikation. Diese Ladespezifikationen kann beispielsweise als Teil der Ladeanforderung empfangen werden. Der "Empfang der Ladespezifikation" kann insofern so umgesetzt werden, dass die Ladeanforderung die Ladespezifikationen enthält und diese zum Beispiel durch ein Modul der Vorrichtung, die das Verfahren durchführt (z.B. die Kontrolleinheit), aus der Ladeanforderung extrahiert wird und der Durchführung der weiteren Verfahrensschritte zur Verfügung gestellt wird. Insofern kann der Empfang der Ladespezifikationen auch einfach angeben, dass bei der internen Durchführung des Verfahrens die Ladespezifikationen als Teil der Ladeanforderung zur weiteren Durchführung des Verfahrens zur Verfügung gestellt wird. Es ist natürlich auch möglich, dass die Ladespezifikation getrennt von der Ladeanforderung empfangen wird.

Nun folgt in Schritt 624 das Bestimmen des Ladezustands des aufzuladenden Fahrzeugs. Der Zustand kann beispielsweise anhand von Angaben in der empfangen Ladespezifikation bestimmt werden, wobei zum Beispiel die Ladespezifikation direkt den aktuellen Ladezustand, beispielsweise als Prozentwert relativ zum vollgeladenen Zustand oder als Angabe der aktuell noch in der Batterie enthaltenen Energiemenge oder als Angabe, welche Energiemenge bereits aus der Batterie entnommen wurde umfassen kann. Bei den letzteren beiden Varianten ist sehr verständlich wichtig zu wissen, welche Energiemenge die Batterie maximal aufnehmen kann, zum Beispiel angegeben in Amperestunden.

Ist der aktuelle Ladezustand jedoch nicht bekannt, so kann dieser gesondert bestimmt werden. So kann zum Beispiel ein drittes Steuersignal an die Phasenwechselschaltung gesendet werden, es angibt, dass entweder alle Außenleiter oder die in Block 601 bestimmten fahrzeugseitigen Außenleiter mit Außenleitern des versorgungsnetzseitigen Eingangsanschlusses miteinander verbunden werden sollen. Typischerweise wird hier eine 1 zu 1 Verbindung zur Anwendung kommen, wobei dies jedoch keine Rolle spielt. Als Antwort hierauf wird die Phasenwechselschaltung eine entsprechende Phasenschaltung als Reaktion auf den Empfang des dritten Steuersignals durchführen. Daraufhin erfolgt eine Bestimmung der aktuellen Ladeleistung des Elektrofahrzeugs. Dies kann analog der Art und Weise geschehen, wie dies obig bezüglich Schritt 606 diskutiert wurde.

So kann die Ladeleistung beispielsweise anhand eines resultierenden Stromflusses in den verwendenden Außenleitern, gemessen am fahrzeugseitigen Ausgangsanschluss oder dem versorgungsnetzseitigen Eingangsanschlusses oder am Elektro-Gebäudeanschluss bestimmt werden. Anhand des Ladeprofil des zu ladenden Elektrofahrzeugs kann daraufhin der aus der aktuellen Ladeleistung auf den aktuellen Ladezustand geschlossen werden.

Nach Schritt 624 setzt sich das Verfahren in Schritt 614 fort. Da jedoch nun Schritt 614 als Reaktion auf die Entscheidung, dass ein Ladevorgang zu planen ist (Schritt 610) erfolgt, geht inne die Bestimmung der zu verwendenden versorgungsnetzseitigen Außenleiter noch weitere Parameter ein. Beispielsweise könnten einer oder mehrere der folgenden Aspekte berücksichtigt werden: Bis wann der Ladevorgang des Elektrofahrzeugs abgeschlossen sein muss, mit welcher Energiemenge das Aufladen insgesamt stattzufinden hat, die Ladekurve und aktuelle Ladezustand des Fahrzeugs, sowie eine maximal zulässige Stromstärke zur Durchführung des Ladevorgangs. Die maximal zulässige Stromstärke bezieht sich hierbei auf die maximal zulässige Stromstärke, welche der Ladepunkt und/oder der Hausanschluss, mit welchem der Ladepunkt verbunden ist, zugelassen ist.

Je mehr Ladepunkte die Ladespezifikationen für zu ladende Fahrzeuge der Kontrolleinheit zu Durchführung des Schritt 614 zu stellen, umso besser kann die Schieflastminimierung durchgeführt werden. In diesem Fall könnte die Kontrolleinheit als zentrale Instanz sämtliche Ladevorgängen koordinieren und seitlich die entsprechenden Ladezeitpunkte so festlegen, dass möglichst zeitlich durchgängig während allen Ladevorgängen die Schieflast am Hausanschluss minimiert ist. Eine vereinfachte Implementierung könnte darin bestehen, dass lediglich sichergestellt wird, dass zum jeweiligen Ladezeitpunkt, d. h. in dem Moment, wenn der jeweilige Ladevorgang an einem Ladepunkt beginnt, unter Berücksichtigung der dadurch fließenden Ladeströme auf den entsprechenden Außenleitern sowie aller anderen zu dem Zeitpunkt stattfindenden Ladevorgänge die zu diesem Zeitpunkt aktuelle Schieflast am Gebäudeanschluss minimiert ist. Die allen anderen zu dem Zeitpunkt stattfindenden Ladevorgänge werden in dieser Variante mit z.B. zu diesem Zeitpunkt voraussichtlichen Ladeströmen und verwendeten Außenleitern berücksichtigt.

In einer weiteren Variante könnte, wenn Ladezustand oder Ladekurve des zu ladenden Elektrofahrzeugs nicht bekannt sind, zur Bestimmung der versorgungsnetzseitigen Außenleiter von einem Durchschnittswert oder Maximalwert der Ladeleistung für diesen Ladevorgang ausgegangen werden. Dieser kann ganz pauschal über alle Fahrzeugtypen hinweg und zum Beispiel spezifisch für die Spezifikationen der fahrzeugseitigen Außenleiter definiert sein oder er kann typenspezifisch für jedes Fahrzeug definiert sein.

Es sei angemerkt, dass der Fachmann verstehen wird, dass die bezüglich Figur 6 diskutierten Verfahrensschritte auch unabhängig von den Verfahrensschritten der Figur 5 durchgeführt werden können. Bei ausreichend dimensionierten Relais ist es möglich, nach Empfang des Steuersignals in Schritt 500 direkt die im Steuersignal spezifizierten Außenleiter (eingangsseitig und ausgangsseitig) miteinander durch die Relais verbinden. Ein Schütz und die bezüglich Figur 5 beschriebene Schaltreihenfolge wären hier nicht zwingend erforderlich.

Der Fachmann wird ferner verstehen, dass Aspekte der vorliegenden Erfindung als Gerät, Verfahren oder Computerprogramm oder Computerprogrammprodukt ausgeführt sein können. Entsprechend können Aspekte der vorliegenden Erfindung die Form einer reinen Hardware-Ausführungsform, einer reinen Software-Ausführungsform (darunter Firmware, im Speicher befindliche Software, Mikro-Code, usw.) oder einer Software- und Hardware-Aspekte kombinierenden Ausführungsform annehmen, die hierin alle allgemein als "Schaltkreis", "Modul" oder "System" bezeichnet sein können. Des Weiteren können Aspekte der vorliegenden Erfindung die Form eines Computerprogrammprodukts annehmen, welches durch ein computerlesbares Medium oder durch mehrere computerlesbare Medien in Form von computerausführbarem Code getragen wird. Ein Computerprogramm umfasst ebenfalls den computerausführbarem Code. "Computerausführbarem Code" kann auch als "Computerprogrammanweisungen" bezeichnet werden.

Eine beliebige Kombination von einem oder mehreren computerlesbaren Medium (en) kann verwendet werden. Das computerlesbare Medium kann ein computerlesbares Signalmedium oder ein computerlesbares Speichermedium sein. Ein "computerlesbares Speichermedium", wie hierin verwendet, umfasst ein materielles Speichermedium, das Anweisungen speichern kann, die durch einen Prozessor einer Computervorrichtung ausführbar sind. Das computerlesbare Speichermedium kann als computerlesbares nichtflüchtiges Speichermedium bezeichnet werden. Das computerlesbare Speichermedium kann auch als ein greifbares computerlesbares Medium bezeichnet werden. In einigen Ausführungsformen kann ein computerlesbares Speichermedium auch in der Lage sein Daten zu speichern, die es ermöglichen, dass durch den Prozessor der Rechnervorrichtung auf sie zugegriffen wird. Beispiele von computerlesbaren Speichermedien umfassen, sind aber nicht beschränkt auf: eine Diskette, eine magnetische Festplatte, eine Festkörper-Festplatte, Flash-Speicher, einen USB-Stick, Random Access Memory (RAM), Festwertspeicher (ROM), eine optische Platte, eine magneto-optische Platte, und die Registerdatei des Prozessors. Beispiele für optische Platten umfassen Compact Disks (CD) und Digital Versatile Disks (DVD), zum Beispiel CD-ROM, CD-RW, CD-R, DVD-ROM, DVD-RW oder DVD-R-Disks. Der Begriff computerlesbares Speichermedium bezieht sich auch auf verschiedene Arten von Aufzeichnungsmedien, die dafür geeignet sind von der Rechnervorrichtung über ein Netzwerk oder eine Kommunikationsverbindung abgerufen zu werden. Zum Beispiel können Daten über ein Modem, über das Internet oder über ein lokales Netzwerk abgerufen werden. Computerausführbarer Code, der auf einem computerlesbaren Medium ausgeführt wird, kann über jedes geeignete Medium übermittelt werden, einschließlich, aber nicht darauf beschränkt, drahtlose, drahtgebundene, Lichtwellenleiter, RF, etc., oder jede geeignete Kombination der vorstehenden Medien.

Ein computerlesbares Signalmedium kann ein ausgebreitetes Datensignal beinhalten, das den computerlesbaren Programmcode zum Beispiel in einem Basissignal (baseband) oder als Teil eines Trägersignals (Trägerwelle) enthält. Solch ein Ausbreitungssignal kann in einer beliebigen Form ausgebildet sein, darunter, jedoch nicht beschränkt auf, eine elektromagnetische Form, eine optische Form oder jede geeignete Kombination davon. Bei einem computerlesbaren Signalmedium kann es sich um ein beliebiges computerlesbares Medium handeln, das kein computerlesbares Speichermedium ist und das ein Programm zur Verwendung durch oder in Verbindung mit einem System, Gerät oder Vorrichtung zur Ausführung von Anweisungen übertragen, verbreiten oder transportieren kann.

"Computer-Speicher" oder "Speicher" ist ein Beispiel für ein computerlesbares Speichermedium. Ein Computer-Speicher ist jeder Speicher, der einem Prozessor direkt zugänglich ist.

"Computer-Datenspeicher" oder "Datenspeicher" ist ein weiteres Beispiel eines computerlesbaren Speichermediums. Computer-Datenspeicher ist jedes nichtflüchtige computerlesbare Speichermedium. In einigen Ausführungsformen kann ein Computerspeicher auch ein Computer-Datenspeicher sein oder umgekehrt.

Ein "Prozessor", wie er hierin verwendet wird, umfasst eine elektronische Komponente, die in der Lage ist, eine programm- oder maschinenausführbare Anweisung oder computerausführbaren Code auszuführen. Eine Bezugnahme auf die Rechnervorrichtung, die einen "Prozessor" umfasst, sollte so interpretiert werden, dass sie möglicherweise mehr als einen Prozessor oder Verarbeitungskerne umfasst. Der Prozessor kann zum Beispiel ein Multi-Core-Prozessor sein. Ein Prozessor kann sich auch auf eine Sammlung von Prozessoren innerhalb eines einzigen Computersystems oder verteilt auf mehrere Computersysteme beziehen. Der Begriff Rechnervorrichtung oder des Computers soll auch so interpretiert werden, um möglicherweise auf eine Sammlung oder ein Netzwerk von Rechnervorrichtungen oder Computern, die jeweils einen Prozessor oder Prozessoren umfassen, hinzuweisen. Der computerausführbare Code kann durch mehrere Prozessoren ausgeführt werden, die innerhalb derselben Rechnervorrichtung oder sogar über mehrere Computer verteilt sein können.

Computerausführbarer Code kann maschinenausführbare Anweisungen oder ein Programm umfassen, das einen Prozessor veranlasst, einen Aspekt der vorliegenden Erfindung durchzuführen. Computerausführbarer Code zum Ausführen von Operationen für Aspekte der vorliegenden Erfindung kann in jeder beliebigen Kombination einer oder mehrerer Programmiersprachen geschrieben sein, darunter eine objektorientierte Programmiersprache wie Java, Smalltalk, C++ oder Ähnliche und herkömmliche verfahrensorientierte Programmiersprachen wie die Programmiersprache "C" oder ähnliche Programmiersprachen, und in maschinenausführbare Anweisungen übersetzt werden. In einigen Fällen kann der computerausführbare Code in der Form einer höheren Programmiersprache oder in einer vor-übersetzten Form vorliegen, und in Verbindung mit einem Interpreter verwendet werden, der die maschinenausführbaren Anweisungen generiert.

Der computerausführbare Code kann vollständig auf dem Rechner eines Benutzers, teilweise auf dem Rechner des Benutzers, als eigenständiges Software-Paket, teilweise auf dem Rechner des Benutzers und teilweise auf einem entfernt angeordneten Rechner oder vollständig auf dem entfernt angeordneten Rechner oder Server ausgeführt werden. In letzterem Fall kann der entfernt angeordnete Rechner mit dem Rechner des Benutzers durch eine beliebige Art von Netzwerk verbunden sein, einschließlich einem lokalen Netzwerk (LAN) oder einem Weitverkehrsnetz (WAN), oder die Verbindung kann mit einem externen Rechner hergestellt werden (zum Beispiel über das Internet unter Verwendung eines Internet-Dienstanbieters).

Die Computerprogrammanweisungen können auf einem Prozessor oder auf mehreren Prozessoren ausgeführt werden. Im Falle mehrerer Prozessoren können diese auf mehre unterschiedliche Entitäten (z.B. Clients, Servern) verteilt sein. Jeder Prozessor könnte einen für die jeweilige Entität vorgesehenen Teil der Instruktionen ausführen. Wenn also von einem System oder Verfahren die Rede ist, das mehrere Entitäten umfasst, so verstehen sich die Computerprogrammanweisungen so, dass diese so angepasst sind, um durch einen der jeweiligen Entität zugeordneten oder zugehörigen Prozessor ausgeführt zu werden.

Aspekte der vorliegenden Erfindung werden unter Bezugnahme auf Flussdiagramm-Darstellungen und/oder Blockschaltbilder von Verfahren, Vorrichtungen (Systemen) und Computerprogramm-produkten gemäß Ausführungsformen der Erfindung beschrieben. Es wird darauf hingewiesen, dass jeder Block oder Teile der Blöcke der Flussdiagramme, Darstellungen und/oder der Blockschaltbilder durch Computerprogrammanweisungen, gegebenenfalls in Form eines computerausführbaren Codes, ausgeführt werden können. Es wird weiter darauf hingewiesen, dass Kombinationen von Blöcken in verschiedenen Flussdiagrammen, Darstellungen und/oder Blockschaltbildern kombiniert werden können, wenn sie sich nicht gegenseitig ausschließen. Diese Computerprogrammanweisungen können einem Prozessor eines Universalrechners, Spezialrechners oder einer anderen programmierbaren Datenverarbeitungsvorrichtung bereitgestellt werden, um eine Vorrichtung zu erzeugen, so dass die über den Prozessor des Computers oder der anderen programmierbaren Datenverarbeitungsvorrichtung ausgeführten Anweisungen Mittel zur Ausführung der in dem Block oder den Blöcken der Flussdiagramme und/oder der Blockschaltbilder festgelegten Funktionen/Schritte erzeugen.

Diese Computerprogrammanweisungen können auch auf einem computerlesbaren Medium gespeichert sein, die einen Computer oder andere programmierbare Datenverarbeitungsvorrichtungen oder andere Vorrichtungen steuern können, dass sie auf eine bestimmte Art funktionieren, so dass die auf dem computerlesbaren Medium gespeicherten Anweisungen ein Herstellungserzeugnis hervorrufen, einschließlich Anweisungen, welche die/den in dem Block oder den Blöcken der Flussdiagramme und/oder der Blockschaltbilder festgelegte/n Funktion/Schritt umsetzen.

Die Computerprogrammanweisungen können auch auf einen Computer, anderen programmierbaren Datenverarbeitungs-vorrichtungen oder anderen Vorrichtungen gespeichert werden, um die Ausführung einer Reihe von Prozessschritten auf dem Computer, anderen programmierbaren Datenverarbeitungsvorrichtungen oder anderen Vorrichtungen zu verursachen, um einen auf einem Computer ausgeführten Prozess zu erzeugen, so dass die auf dem Computer oder den anderen programmierbaren Vorrichtungen ausgeführten Anweisungen Verfahren zur Umsetzung der in dem Block oder den Blöcken der Flussdiagramme und/oder der Blockschaltbilder festgelegten Funktionen/Schritte erzeugen.

### Bezugszeichenliste

- 100: Fahrzeug
- 102: Ladepunkt
- 104: Kabel
- 106: Internet
- 108: Gebäude
- 110: Verbraucher
- 112: Gebäudeanschluss
- 114: öffentliches Stromnetz
- 116: Phasenwechselschaltung
- 118: Kontrolleinheit
- 120: Ladekabel
- 122: Kabel
- 124: Messeinrichtung
- 200: Phasenwechsler
- 204: Eingangsanschluss
- 206: Ausgangsanschluss
- 208: Schnittstelle
- 210: Prozessor, Speicher
- 300: Schnittstelle
- 302: Prozessor, Speicher
- 400: Schütz
- 402: Relais
- 404: FI Schalter

## Patentansprüche

1. Verfahren zum Laden eines Elektrofahrzeugs (100) an einem Ladepunkt (102) unter Verwendung einer Phasenwechselschaltung (116), wobei die Phasenwechselschaltung (116) aufweist:
- einen versorgungsnetzseitigen Eingangsanschluss (204) mit Außenleitern und einen Elektrofahrzeugseitigen Ausgangsanschluss (206) mit Außenleitern,
- ein Schütz (400) und eine Relaisanordnung (402), wobei die Relaisanordnung (402) über Schaltkontakte des Schützes (400) mit dem Eingangsanschluss verbunden ist, und wobei die Relaisanordnung (402) mit dem Ausgangsanschluss (206) verbunden ist,
wobei das Verfahren durch die Phasenwechselschaltung (116) den Empfang eines Steuersignals zum Durchführen des Ladevorgangs des Elektrofahrzeugs (100) umfasst, wobei das Steuersignal angibt, welcher oder welche Außenleiter des versorgungsnetzseitigen Eingangsanschlusses (204) und des Elektrofahrzeugseitigen Ausgangsanschlusses (206) miteinander zu verbinden sind, wobei als Reaktion auf den Empfang des Steuersignals die Phasenwechselschaltung (116) eine Phasenschaltung durchführt welche umfasst:
- Miteinander Verbinden des oder der Außenleiter des Eingangsanschlusses (204) und des Ausgangsanschlusses (206) durch die Relaisanordnung (402) entsprechend dem Steuersignal,
- Nach dem Verbinden, Schließen der Schaltkontakte.

2. Verfahren nach Anspruch 1, wobei die Phasenwechselschaltung (116) das Verbinden der Außenleiter nur ermöglicht, wenn die Schaltkontakte geöffnet sind, wobei im Falle dessen das Steuersignal empfangen wird während die Schaltkontakte geschlossen sind zunächst die Schaltkontakte geöffnet werden, dann das Verbinden der Außenleiter stattfindet und anschließend das Schließen der Schaltkontakte erfolgt.

3. Verfahren nach einem der vorigen Ansprüche, wobei die Außenleiter des versorgungsnetzseitigen Eingangsanschlusses (204) des Ladepunkts (102) mit entsprechenden Außenleitern eines mit Versorgungsnetzspannung versorgten Elektro-Gebäudeanschluss (112) verbunden sind, wobei das Verfahren ferner umfasst: Durchführen einer ersten Außenleiterbestimmung umfassend Bestimmung der Außenleiter des versorgungsnetzseitigen Eingangsanschlusses (204), bei deren Verwendung für den Ladevorgang des Elektrofahrzeugs (100) eine etwaige versorgungsnetzseitige Schieflast bezüglich aller Außenleiter des Elektro-Gebäudeanschlusses (112) minimiert wird, wobei das Steuersignal die so bestimmten Außenleiter des versorgungsnetzseitigen Eingangsanschluss (204) angibt.

4. Verfahren nach einem der vorigen Ansprüche, ferner umfassend Durchführen einer zweiten Außenleiterbestimmung umfassend Bestimmung der Außenleiter des Elektrofahrzeugseitigen Ausgangsanschlusses (206), welche für den Ladevorgang verwendet werden, wobei das Steuersignal die so bestimmten Außenleiter des Elektrofahrzeugseitigen Ausgangsanschlusses (206) angibt.

5. Verfahren nach Anspruch 4, ferner umfassend:
- Senden des Steuersignals als erstes Steuersignal an die Phasenwechselschaltung (116) welches angibt, dass die mittels der ersten und ersten Außenleiterbestimmung bestimmten Außenleiter des Elektrofahrzeugseitigen Ausgangsanschlusses (206) und des für den Ladevorgang verwendeten versorgungsnetzseitigen Eingangsanschlusses (204) miteinander verbunden werden sollen,
- Durchführen der Phasenschaltung als erste Phasenschaltung als Reaktion auf den Empfang des ersten Steuersignals.

6. Verfahren nach Anspruch 4 oder 5, wobei
- die zweite Außenleiterbestimmung der Außenleiter des Elektrofahrzeugseitigen Ausgangsanschlusses (206) eine Bestimmung der Anzahl N der Außenleiter des Elektrofahrzeugseitigen Ausgangsanschlusses (206) umfasst, welche für den Ladevorgang verwendet werden,
- im Falle dessen nicht alle Außenleiter des Elektrofahrzeugseitigen Ausgangsanschlusses (206) für den Ladevorgang verwendet werden die erste Außenleiterbestimmung des versorgungsnetzseitigen Eingangsanschlusses (204) eine Bestimmung der N Außenleiter des versorgungsnetzseitigen Eingangsanschlusses (204) umfasst, bei deren Verwendung für den Ladevorgang des Elektrofahrzeugs (100) eine etwaige versorgungsnetzseitige Schieflast bezüglich aller Außenleiter des Elektro-Gebäudeanschlusses (112) minimiert wird.

7. Verfahren nach einem der Ansprüche 4-6, wobei die Bestimmung der Außenleiter des Elektrofahrzeugseitigen Ausgangsanschlusses (206), welche für den Ladevorgang verwendet werden, umfasst:
- Senden des Steuersignals als zweites Steuersignal an die Phasenwechselschaltung (116) welches angibt, dass alle Außenleiter des Elektrofahrzeugseitigen Ausgangsanschlusses (206) und des versorgungsnetzseitigen Eingangsanschlusses (204) miteinander verbunden werden sollen,
- Durchführen der Phasenschaltung als zweite Phasenschaltung als Reaktion auf den Empfang des zweiten Steuersignals,
- Bestimmung eines die aktuelle Ladeleistung des Elektrofahrzeugs (100) charakterisierenden Wertes für jeden Außenleiter des Elektrofahrzeugseitigen Ausgangsanschlusses (206) oder des versorgungsnetzseitigen Eingangsanschlusses (204), wobei die Bestimmung der Außenleiter des Elektrofahrzeugseitigen Ausgangsanschlusses (206), welche für den Ladevorgang verwendet werden, auf Basis der Werte erfolgt.

8. Verfahren nach einem der Ansprüche 4-6, wobei die der Außenleiter des Elektrofahrzeugseitigen Ausgangsanschlusses (206), welche für den Ladevorgang verwendet werden den Empfang einer Ladeanforderung des Elektrofahrzeuges umfasst, wobei die Ladeanforderung umfasst:
- die für den Ladevorgang zu verwendenden Außenleiter des Elektrofahrzeugseitigen Ausgangsanschlusses (206) und/oder
- die Anzahl N der für den Ladevorgang zu verwendenden Außenleiter des Elektrofahrzeugseitigen Ausgangsanschlusses (206) und/oder
- eine Angabe bezüglich des Elektrofahrzeuges, wobei das Verfahren auf Basis der Angabe bezüglich des Elektrofahrzeugs (100) eine Datenbankabfrage umfasst und als Antwort auf die Datenbankabfrage die Anzahl N oder die für den Ladevorgang zu verwendenden Außenleiter des Elektrofahrzeugseitigen Ausgangsanschlusses (206) resultiert.

9. Verfahren nach Anspruch 8, wobei der Ladepunkt (102) eine Schnittstelle zur Kommunikation mit einem Nutzer des zu ladenden Elektrofahrzeugs (100) oder dem zu ladenden Elektrofahrzeug selbst aufweist, wobei über die Schnittstelle die Ladeanforderung für das Elektrofahrzeug (100) empfangen wird.

10. Verfahren nach einem der vorigen Ansprüche, wobei der Ladepunkt (102) ein Ladepunkt (102) eines Satzes von Ladepunkten (102) ist, wobei die Außenleiter der versorgungsnetzseitigen Eingangsanschlüsse der Ladepunkte (102) mit entsprechenden Außenleitern eines mit Versorgungsnetzspannung versorgten Elektro-Gebäudeanschlusses (112) verbunden sind.

11. Verfahren nach einem der vorigen Ansprüche, wobei die erste Außenleiterbestimmung zur Minimierung einer Schieflast auf Basis einer Messung von die Schieflast repräsentativen Werten an den Außenleitern des Elektro-Gebäudeanschlusses (112) durch eine Messeinrichtung (124) erfolgt.

12. Verfahren nach einem der vorigen Ansprüche, wobei etwaige Ladevorgänge für alle Ladepunkte (102) durch eine Kontrolleinheit (118) gesteuert werden, wobei das Steuersignal durch die Kontrolleinheit (118) gesendet wird, wobei optional die erste Außenleiterbestimmung durch die Kontrolleinheit (118) auf Basis der für den oder die jeweiligen aktuellen Ladevorgänge und optional zukünftig anstehende Ladevorgänge durch die Ladepunkte (102) verwendeten Ladeleistungen erfolgt.

13. Verfahren nach Anspruch 12, ferner umfassend Empfang einer oder mehrerer Ladespezifikationen für zumindest einen Teil von durch die Ladepunkte (102) durchzuführenden Ladevorgängen, wobei die etwaigen Ladevorgänge für den oder die Ladepunkte (102) durch die Kontrolleinheit (118) auf der Basis der Ladespezifikationen gesteuert werden, wobei die Ladespezifikationen für zumindest einen Teil von durch die Ladepunkte (102) durchzuführenden Ladevorgängen jeweils folgendes angeben:
- bis wann der Ladevorgang abgeschlossen sein muss und/oder
- die erforderliche Lademenge und/oder
- einen gewünschten Ladezeitraum und/oder
- einer Ladekurve und eines aktuellen Ladezustands des an dem etwaigen Ladenpunkt zu ladenden, und/oder
- eine maximal zulässige Stromstärke zur Durchführung des Ladevorgangs,
wobei optional die erste Außenleiterbestimmung zur Minimierung der Schieflast durch die Kontrolleinheit (118) auf Basis der Ladespezifikationen erfolgt und die Kontrolleinheit (118) das Steuersignal sendet.

14. Verfahren nach einem der vorigen Ansprüche, ferner umfassend Empfang einer oder mehrerer Ladespezifikationen für zumindest einen Teil von durch die Ladepunkte (102) durchzuführenden Ladevorgängen, wobei das Verfahren durch die Kontrolleinheit (118) ferner auf Basis der Ladespezifikationen ein Bestimmen eines Ladezeitpunkts umfasst, wobei die Bestimmung so erfolgt, dass unter Berücksichtigung aller der Kontrolleinheit (118) bekannten Ladespezifikationen zum Ladezeitpunkt eine etwaige versorgungsnetzseitige Schieflast bezüglich aller Außenleiter des Elektro-Gebäudeanschlusses (112) minimiert wird, wobei das Steuersignal zu dem bestimmten Ladezeitpunkt gesendet wird.

15. Verfahren nach einem der vorigen Ansprüche 13-14, wobei das Verfahren durch die Kontrolleinheit (118) ferner ein Bestimmen der für den Ladevorgang zulässigen Ladeleistung umfasst, wobei die Bestimmung der zulässigen Ladeleistung so erfolgt, dass unter Berücksichtigung aller der Kontrolleinheit (118) bekannten Ladespezifikationen während dem Ladevorgang eine etwaige versorgungsnetzseitige Schieflast bezüglich aller Außenleiter des Elektro-Gebäudeanschlusses (112) minimiert bleibt.

16. Verfahren nach einem der vorigen Ansprüche 13 - 15, ferner umfassend Bestimmen des aktuellen Ladezustands des zu ladenden Elektrofahrzeugs (100), umfassend:
- Senden des Steuersignals als drittes Steuersignal an die Phasenwechselschaltung (116) welches angibt, dass die Außenleiter des Elektrofahrzeugseitigen Ausgangsanschlusses (206) und des für den Ladevorgang verwendeten versorgungsnetzseitigen Eingangsanschlusses (204) miteinander verbunden werden sollen,
- Durchführen der Phasenschaltung als dritte Phasenschaltung als Reaktion auf den Empfang des dritten Steuersignals,
- Bestimmung der aktuellen Ladeleistung des Elektrofahrzeugs (100),
- Bestimmung des aktuellen Ladezustands aus der aktuellen Ladeleistung und dem Ladeprofil des zu ladenden Elektrofahrzeugs (100).

17. Verfahren nach einem der vorigen Ansprüche 1 bis 16, bei dem eine Phasenwechselschaltung (116) verwendet wird, deren Relaisanordnung (402) fünf Relais, vorzugsweise genau fünf Relais, aufweist, von denen drei Relais dazu dienen, jeweils die Verbindung eines ersten von drei versorgungsnetzseitigen Außenleitern (L1, L2, L3) mit dem ersten Elektrofahrzeugseitigen Außenleiter (L1) herzustellen beziehungsweise zu trennen und von denen die beiden weiteren Relais dazu dienen, von den von dem ersten versorgungsnetzseitigen Außenleiter (L1) verschiedenen beiden anderen (L2, L3) der drei versorgungsnetzseitigen Außenleiter (L1, L2, L3) jeweils die Verbindung zum gleichnamigen Elektrofahrzeugseitigen Außenleiter (L2, L3) herzustellen beziehungsweise zu trennen.

18. Verfahren nach Anspruch 3 oder einem der vorigen Ansprüche 4 bis 17 in deren Rückbezug auf Anspruch 3 , bei dem zur Vermeidung einer Schieflast auch bei einem Fahrzeug, welches regulär auf drei Phasen, entsprechend einer Verbindung von drei versorgungsnetzseitigen Außenleitern (L1, L2, L3) mit drei Elektrofahrzeugseitigen Außenleitern, geladen wird, ausnahmsweise durch das Steuersignal die Ladung auf nur einer Phase über einen einzigen versorgungsnetzseitigen Außenleiter bewirkt wird.

19. Verfahren nach einem der vorigen Ansprüche 1 bis 18, wobei die Phasenwechselschaltung (116) ein Hilfsrelais (410) zum Koppeln eines versorgungsnetzseitigen Nullleiters mit einem Sicherheitsmodul (412) aufweist, wobei das Sicherheitsmodul (412) zu einer Fehlerstromprüfung und/oder Kurzschlussprüfung ausgebildet ist, wobei nach dem Miteinander Verbinden des oder der Außenleiter des Eingangsanschlusses (204) und des Ausgangsanschlusses (206) durch die Relaisanordnung (402) entsprechend dem Steuersignal und vor dem Schließen der Schaltkontakte:
- das Hilfsrelais (410) geschlossen wird,
- das Sicherheitsmodul (412) unter Verwendung des versorgungsnetzseitigen Nullleiters eine Fehlerstromprüfung und/oder Kurzschlussprüfung bezüglich aller Elektrofahrzeugseitigen Außenleiter (L1, L2, L3) vornimmt
- das Hilfsrelais wieder geöffnet wird,
- die Schaltkontakte nur bei Nichtvorhandensein eines Fehlerstroms bzw. Kurzschlusses geschlossen werden.

20. Verfahren zum Laden eines Elektrofahrzeugs (100) an einem Ladepunkt (102), wobei der Ladepunkt (102) mit entsprechenden Außenleitern eines mit Versorgungsnetzspannung versorgten Elektro-Gebäudeanschluss (112) verbunden ist, wobei etwaige Ladevorgänge für den Ladepunkt (102) durch eine Kontrolleinheit (118) auf der Basis von Ladespezifikationen gesteuert wird, wobei die Ladespezifikationen für die durchzuführenden Ladevorgänge eine Ladekurve und einen aktuellen Ladezustand des zu ladenden Elektrofahrzeugs (100) angeben, wobei das Verfahren umfasst:
- Bestimmung auf Basis der Ladespezifikationen der Außenleiter des versorgungsnetzseitigen Eingangsanschlusses (204), bei deren Verwendung für den Ladevorgang des Elektrofahrzeugs (100) eine etwaige versorgungsnetzseitige Schieflast bezüglich aller Außenleiter des Elektro-Gebäudeanschlusses (112) minimiert wird,
- Veranlassen des Ladepunkts (102) zu dem Ladevorgang des Elektrofahrzeugs (100) durch Senden eines Steuersignals, wobei das Steuersignal die bestimmten Außenleiter angibt.

21. Verfahren nach Anspruch 20, ferner umfassend bestimmen des aktuellen Ladezustands des zu ladenden Elektrofahrzeugs (100), umfassend:
- Laden des Elektrofahrzeugs (100),
- Bestimmung der aktuellen Ladeleistung des Elektrofahrzeugs (100),
- Bestimmung des aktuellen Ladezustands aus der aktuellen Ladeleistung und dem Ladeprofil des zu ladenden Elektrofahrzeugs (100).

22. Kontrolleinheit (118) zum Laden eines Elektrofahrzeugs (100) über einen Ladepunkt (102), der Ladepunkt (102) mit entsprechenden Außenleitern eines mit Versorgungsnetzspannung versorgten Elektro-Gebäudeanschluss (112) verbunden ist, wobei die Kontrolleinheit (118) dazu ausgebildet ist, etwaige Ladevorgänge auf der Basis von Ladespezifikationen zu steuern, wobei die Ladespezifikationen eine Ladekurve und einen aktuellen Ladezustand des zu ladenden Elektrofahrzeugs (100) angeben, wobei die Kontrolleinheit (118) ausgebildet ist zum:
- Bestimmen auf Basis der Ladespezifikationen der Außenleiter des versorgungsnetzseitigen Eingangsanschlusses (204), bei deren Verwendung für den Ladevorgang des Elektrofahrzeugs (100) eine etwaige versorgungsnetzseitige Schieflast bezüglich aller Außenleiter des Elektro-Gebäudeanschlusses (112) minimiert wird,
- Veranlassen des Ladepunkts (102) für den Ladevorgang des Elektrofahrzeugs (100) durch Senden eines Steuersignals, wobei das Steuersignal die zu verwendenden Außenleiter angibt.

23. System zum Laden eines Elektrofahrzeugs (100) an einem Ladepunkt (102), wobei das System eine Phasenwechselschaltung (116) umfasst, wobei die Phasenwechselschaltung (116) aufweist:
- einen versorgungsnetzseitigen Eingangsanschluss (204) mit Außenleitern und einen Elektrofahrzeugseitigen Ausgangsanschluss (206) mit Außenleitern,
- ein Schütz (400) und eine Relaisanordnung (402), wobei die Relaisanordnung (402) über Schaltkontakte des Schützes (400) mit dem Eingangsanschluss verbunden ist, und wobei die Relaisanordnung (402) mit dem Ausgangsanschluss (206) verbunden ist,
wobei die Phasenwechselschaltung (116) ausgebildet ist zum:
- Empfang eines Steuersignals zum Durchführen des Ladevorgangs des Elektrofahrzeugs (100), wobei das Steuersignal angibt, welcher oder welche Außenleiter des versorgungsnetzseitigen Eingangsanschlusses (204) und des Elektrofahrzeugseitigen Ausgangsanschlusses (206) miteinander zu verbinden sind,
- als Reaktion auf den Empfang des Steuersignals, Durchführen einer Phasenschaltung welche umfasst:
i. Miteinander Verbinden des oder der Außenleiter des Eingangsanschlusses und des Ausgangsanschlusses (206) durch die Relaisanordnung (402) entsprechend dem Steuersignal,
ii. Nach dem Verbinden, Schließen der Schaltkontakte.

24. Computerprogrammprodukt mit von einem oder mehreren verteilten Prozessoren ausführbaren Instruktionen, wobei die Ausführung der Instruktionen die Prozessoren zur Durchführung des Verfahrens gemäß einem der vorigen Ansprüche 1-21 veranlasst.
